# EUROPÄISCHE PATENTSCHRIFT

(11) **EP 4 293 760 B1**
(45) Veröffentlichungstag und Bekanntmachung des Hinweises auf die Patenterteilung: **04.11.2026**
(21) Anmeldenummer: 22179642.8
(22) Anmeldetag: 17.06.2022
(51) Int. Cl.: H01M 8/00, H01M 8/0258, H01M 8/026, H01M 8/18

(54) **VERTEILERPLATTE FÜR EIN FLUID ZUM AUSBILDEN EINER FLUIDZELLE, ZELLENANORDNUNG AUS ZWEI VERTEILERPLATTEN UND STAPEL AUS MEHREREN ZELLENANORDNUNGEN**
DISTRIBUTION PLATE FOR A FLUID FOR FORMING A FLUID CELL, CELL ASSEMBLY COMPRISING TWO MANIFOLD PLATES AND STACK OF SEVERAL CELL ASSEMBLIES
PLAQUE DISTRIBUTRICE POUR UN LIQUIDE PERMETTANT DE FORMER UNE CELLULE FLUIDE, ENSEMBLE CELLULAIRE COMPOSÉ DE DEUX PLAQUES DISTRIBUTRICES ET EMPILEMENT D'UNE PLURALITÉ D'ENSEMBLES DE CELLULES

(43) Veröffentlichungstag der Anmeldung: 20.12.2023
(73) Patentinhaber: Jena Flow Batteries GmbH, 07745 Jena (DE)
(72) Erfinder: CONRAD, Olaf, 07743 Jena (DE); HAUTMANN, Gerhard, 78315 Radolfzell (DE); ELLMANN, Richard, 07743 Jena (DE); FREYER, Erik, 99084 Erfurt (DE); SCHMIDT, Stefan, 07743 Jena (DE); SMOLLICH, Yannis, 07749 Jena (DE)
(74) Vertreter: Michalski Hüttermann & Partner mbB

(56) Entgegenhaltungen:
- WO-A1-2016/153428
- GB-A- 2 342 222
- US-A1- 2021 359 328

## Beschreibung

Die Erfindung betrifft eine Verteilerplatte für ein Fluid zum Ausbilden einer Fluidzelle nach dem Oberbegriff des Anspruch 1, eine Zellenanordnung aus zwei Verteilerplatten nach Anspruch 9 und einen Stapel aus mehreren Zellenanordnungen nach Anspruch 11.

Die Fluidzelle ist Teil eines mindestens eine erste und eine zweite Fluidzelle aufweisenden Energiespeichers zum Speichern elektrischer Energie, insbesondere einer auch als Nasszelle bezeichneten Redox-Flow-Batterie oder einer Wasserstoffzelle / Brennstoffzelle. Zwischen jeder ersten und zweiten Fluidzelle des Energiespeichers ist eine Ionenaustauchmembran angeordnet, die eine Vermischung der Fluide in der ersten und der zweiten Fluidzelle verhindert, aber einen Ionenaustausch erlaubt. Hierdurch wird elektrische Energie freigesetzt.

Die vorgeschlagene Verteilerplatte weist einen Zellrahmen und zumindest zwei, ggf. auch genau zwei, Fluidsegmente auf. Der Innenrand des Zellrahmens umschließt einen aktiven Zellraum. In dem Zellrahmen sind zumindest zwei, ggf. auch genau zwei, Fluidführungen ausgebildet, von denen eine für das Einleiten des Fluid in den aktiven Zelleraum und die andere für das Ausleiten des Fluids aus dem aktiven Zellraum vorgesehen sind. Die Fluidsegmente sind mit jeweils einem als Durchgangsöffnung durch die Verteilerplatte ausgebildeten Fluidkanal zum Anschluss an ein Fluidreservoir und mit jeweils einem Shuntkanal ausgestattet, der zwischen dem Fluidkanal und jeweils einer der beiden Fluidführungen ausgebildet ist.

Ein solcher Aufbau einer Verteilerplatte ist bspw. aus der DE 21 2015 000 124 U1 bekannt.

WO 2016153428 (A1) beschreibt eine Fluidzelle, die eine Kanalplatte mit einem in eine Oberfläche der Kanalplatte eingelassenen Kanal und einer in die Oberfläche der Kanalplatte eingelassenen Nut umfasst, wobei die Nut so konfiguriert ist, dass sie den Kanal umgibt und vorzugsweise entlang einer Grenze des Kanals verläuft. Die Fluidzelle umfasst außerdem eine Dichtung, die in die Nut aufgenommen werden kann, ein Substrat, eine Trägerplatte und ein Befestigungselement, das so konfiguriert ist, dass die Kanalplatte lösbar an der Trägerplatte befestigt werden kann, wobei das Substrat zwischen der Kanalplatte und der Trägerplatte eingeklemmt ist, um die Dichtung mit dem Substrat gegen die Kanalplatte zu drücken.

US 2021359328 (A1) beschreibt eine Redox-Flow-Batterie und ein Batteriesystem wobei die Redox-Flow-Batterie einen Zellstapel umfasst, der zwischen zwei Endplatten angeordnet ist und der eine Vielzahl von zusammengefügten Membranrahmenplatten und bipolaren Rahmenplatten umfasst, die an einer Schnittstelle eine Vielzahl von negativen und positiven Strömungskanälen bilden, die dazu ausgelegt sind, negativen und positiven Elektrolyt in eine Vielzahl von bipolaren Platten zu verteilen. In der Batterie ist eine Membran mit jeder der Vielzahl von Membranrahmenplatten gekoppelt und nacheinander zwischen zwei der in der Vielzahl von Bipolarplatten enthaltenen Bipolarplatten positioniert.

GB2342222A beschreibt einen Strömungsrahmen zum Bilden einer Unterbaugruppe; wobei die Unterbaugruppe eine bipolare Elektrode und eine ionenselektive Membran umfasst, die auf dem Strömungsrahmen montiert sind, und wobei die Unterbaugruppe mit anderen derartigen Unterbaugruppen gestapelt werden kann, um eine Anordnung von elektrochemischen Zellen zu bilden; wobei der Strömungsrahmen aus einem elektrisch isolierenden Material gebildet ist und mindestens vier Verteilerabschnitte umfasst, die auch Wege für den Durchgang des Anolyten/Katholyten definieren.

Der Shuntkanal hat einerseits die Aufgabe, Fluid mit den darin enthaltenen Ionen von einem Fluidreservoir über den durchgehenden Fluidkanal in meist mehreren übereinander angeordneten Fluidsegmenten in den aktiven Zellraum zu leiten bzw. das Fluid nach dem Ionenaustausch aus dem aktiven Zellraum zurück in das Fluidreservoir zu leiten, wobei für durch die Ionenaustauschmembran getrennten aktiven Zellräume erfindungsgemäß typischerweise verschiedene Fluidreservoire vorgesehen sind. Durch die Ionenaustauschmembran zwischen zwei aktiven Zellräumen können die Ionen diffundieren und hierdurch elektrische Energie aus dem Energiespeicher freisetzen. Damit das Fluid die aktiven Zellräume durchströmen kann, wird das Fluid unter Druck durch die Fluidkanäle und die Shuntkanäle geführt. Daher ist es vorteilhaft, wenn die Strömung mit möglichst geringem hydraulischem Widerstand durch die jeweiligen Strömungskanäle strömt. Hydraulischer Widerstand führt zu Verwirbelungen des Fluids und reduziert den effektiven Strömungsquerschnitt. Unter dem Gesichtspunkt der Optimierung des hydraulischen Widerstands sind Strömungskanäle mit möglichst gradlinigem Verlauf und gleichmäßigem Querschnitt optimal, weil sich dort eine laminare Strömung ausbildet. Dies würde unter den geometrischen Rahmenbedingungen der Verteilerplatte zu kurzen Shuntkanälen führen.

Aufgrund einer typischen Anordnung mehrerer Fluidzellen in einem Stapel kommt es zu Spannungsunterschieden zwischen den Fluidzellen, sodass durch die Ladung der Ionen und den Ionenaustausch ein Strom fließen kann. Diese Potentialunterschiede führen entlang des Fluidverlauf zu einem unerwünschten Stromfluss, der durch den Shuntkanal minimiert werden soll. Der Shuntkanal wirkt also als Shuntwiderstand, der den Stromschluss immer weiter vermindert, je höher der elektrische Shuntwiderstand ist. Da der Shuntwiderstand insbesondere mit der Länge des Shuntkanals zunimmt, wird unter diesem Gesichtspunkt ein möglichst langer Shuntkanal angestrebt, was unter den geometrischen Rahmenbedingungen der Verteilerplatte einen kurvigen Shuntkanal begünstigen würde.

Um ein möglichst optimales Verhältnis zwischen Leistung der Batterie und Platzbedarf sowie Materialeinsatz zu erreichen, ist die Höhe einer typischen Verteilerplatte sehr viel kleiner als deren Länge und Breite. Auch diese im Vergleich niedrige Höhe ist eine limitierende geometrische Randbedingen, die es in der Praxis erschwert, die unter vielen Gesichtspunkten gegenläufigen optimierten Ausgestaltungen hydraulischer und elektrischer Anforderungen zu erfüllen.

Aufgabe der Erfindung ist es daher, eine Möglichkeit für eine Verteilerplatte, eine aus zwei Verteilerplatten aufgebaute Zellenanordnung und einen aus mehreren Zellenordnungen aufgebauten Stapel (zur Ausbildung eines Energiespeichers für insbesondere elektrische Energie) vorzuschlagen, die das Ausbilden eines Shuntkanals mit einem möglichst kleinen hydraulischen Widerstand bei einem möglichst großen elektrischen Widerstand und eine kompakte Anordnung von Verteilerplatten, insbesondere eine möglichst geringe Höhe des aktiven Zellraums, mit diesen Shuntkanälen erlaubt.

Diese Aufgabe wird durch eine Verteilerplatte mit den Merkmalen des Anspruchs 1, eine Zellenanordnung mit den Merkmalen des Anspruchs 9 und einen Stapel aus mehreren Zellenanordnungen mit den Merkmalen des Anspruchs 11 gelöst.

Erfindungsgemäß ist dabei vorgesehen, dass die Verteilerplatte, wie sie auch in der Zellenanordnung und dem Stapel vorgesehen ist, derart ausgebildet ist, dass die Fluidsegmente jeweils von einem Abschnitt des Außenrands des Zellrahmens nach außen vorstehend angeordnet sind, wobei die Höhe der Fluidsegmente größer ist als die Höhe des Zellrahmens, d.h. mit anderen Worten die Fluidsegmente höher sind als der Zellrahmen. Die Höhe des Zellrahmens ist dabei definiert als der Abstand zwischen einer Oberflächenebene und einer Unterflächenebene des Zellrahmens, durch den die Höhe das aktiven Zellraums bestimmt wird. Die Grundfläche, bspw. Länge und Breite oder Durchmesser, des aktiven Zellraums, wird durch die Form des Innenrands des Zellrahmens definiert. Besonders bevorzugt kann vorgesehen sein, dass die Höhe der Fluidsegmente mindestens dem Doppelten der Höhe des Zellrahmens oder genau dem Doppelten der Höhe des Zellrahmens entspricht. Hierdurch wird erreicht, dass die Höhe zweier aufeinanderliegende Zellrahmen genau der Höhe des Fluidsegments entspricht. Dies führt dazu, dass mehrere Verteilerplatten in geeigneter Anordnung aufeinander gestapelt werden können, ohne dass die Fluidsegmente aneinanderstoßen. Mit "genau dem Doppelten der Höhe des Zellrahmens" ist nicht zwangsläufig die genau Höhe des Zellrahmens gemeint, sondern ggf. die Höhe des Zellrahmens und eines Anteils eines Dichtelements, so dass die in einem Stapel aus einer Vielzahl von Verteilerplatten sowohl die aktiven Zellräume der aneinander anliegenden Zellrahmen als auch die Fluidkanäle der aneinander liegenden Fluidsegmente (mit ggf. zwischenliegenden Dichtelementen) jeweils abdichtend miteinander verbunden sind. Dies gilt entsprechend auch für andere später noch genauer beschriebene Ausführungsformen, in denen die Höhe der Fluidsegmente "genau" dem Mehrfachen der Zellrahmenhöhe entspricht.

Weil die Shuntkanäle in den Fluidsegmenten ausgebildet sind, können diese - bei gleichbleibender Querschnittsfläche - einen gleichmäßigen Querschnitt aufweisen, bspw. einen runden, einen näherungsweise runden Querschnitt oder einen Querschnitt mit einen ähnlichen Verhältnis von Höhe des Shuntkanals und Breite des Shuntkanals, etwa näherungsweise quadratisch, wobei Höhe des Shuntkanals und Breite des Shuntkanals als zueinander orthogonale Richtungen in der Querschnittsfläche des Shuntkanals definiert sind. Es ist auch möglich, dass ein näherungsweise quadratischer Querschnitt abgerundete Ecken aufweist und sich so einer runden Form annähert, wobei bspw. auch nur zwei Ecken abgerundet sein können und zwei nicht abgerundeten Ecken gegenüberliegen.

Um in niedrigeren Fluidsegmenten eine gleichbleibende Querschnittsfläche zu erreichen, müssen die Shuntkanäle bei niedrigerer Höhe entsprechend breiter sein, bspw. oval oder rechteckig, was an den Rändern der bereiteren Seiten hydraulisch zu Verwirbelungen führt und damit den Fluiddurchsatz verkleinert, ohne den elektrischen Widerstand zu vergrößern, weil ein Shuntstrom über die gesamte Querschnittsfläche fließen kann. Dies wird durch den gleichmäßigeren Querschnitt bei in der Regel sogar erhöhtem Fluiddurchsatz aufgrund der verbesserten laminaren Strömung vermieden. Theoretisch kann bei einem Querschnitt mit ähnlichem Verhältnis aus Breite und Höhe oder sogar einem runden Querschnitt ein minimaler Shuntstrom bei vergleichbarem hydraulischen Widerstand erreicht werden In einem Stapel mehrerer Verteilerplatten können diese bei geeigneter Anordnung der Fluidsegmente dennoch in gleicher Weise kompakte angeordnet werden, weil die Fluidsegmente nur abschnittsweise am Außenrand des Zellrahmens angeordnet sind und so im gestapelten Zustand nebeneinander anordenbar sind.

In einer bevorzugten Ausführungsform der erfindungsgemäßen Verteilerplatte kann vorgesehen sein, dass die Fluidführungen in dem Zellrahmen an oder in der Oberseite des Zellrahmens und der Shuntkanal an oder in der Oberseite jedes der Fluidsegmente ausgebildet sind, wobei die oberen Ränder der Fluidführungen und die oberen Ränder der Shuntkanäle eine gemeinsame Oberflächenebene von Zellrahmen und Fluidsegmenten bilden. Die Oberseiten von Shuntkanal und Fluidführungen sind also dadurch definiert, dass diese an der Oberseite (vorzugsweise als Ausnehmungen in die Oberseite hinein bzw. in der Oberseite) der Fluidsegmente ausgebildet sind. Damit ist die Oberflächenebene (abgesehen von Ausnehmungen für Shuntkanal und Fluidführungen) plan, so dass die Oberflächenebenen zweiter Verteilerplatten (unter Zwischenlegung von Ionenaustauschmembran und/Dichtung, insbesondere Dichtung mit Ionenaustauschmembran) zum Ausbildung eines Energiespeichers mit über die Ionenaustauschmembran verbundenen aktiven Zellräumen geeignet sind. Entsprechend stehen dann die (geschlossenen) Unterseiten der (höheren) Fluidsegment über die (geschlossene) Unterseite des Zellrahmens hervor. Entsprechend ist die (geschlossene) Unterseite von Zellrahmen und Fluidsegment dadurch definiert, dass in dieser keine Fluidführung und/oder Shuntkanäle ausgebildet sind.

Entsprechend einer weiteren bevorzugten Ausführungsform kann entsprechend vorgesehen sein, dass die Unterseite der Fluidsegmente über die Unterseite des Zellrahmens hinaussteht, wobei der über die Unterseite des Zellrahmens hinausstehende Teil der Fluidsegmente keine senkrecht auf der Unterseite des Zellrahmens stehende und senkrecht zu dem Außenrand des Zellrahmens ausgerichtete Abschnittsbegrenzungsebene der Abschnitte schneidet, in denen die Fluidsegmente angeordnet sind. Hierdurch wird erreicht, dass bei dem Aneinanderfügen (Stapeln) von zwei Verteilerplatten, die relativ zueinander um genau eine der nachstehend noch definierten Symmetrieachsen um 180° verdreht sind, die Fluidsegmente der verschiedenen Verteilerplatten auch dann nicht überlappen, wenn die Zellrahmen aufeinanderliegen. Die Fluidsegmente liegen in einer solchen Anordnung dann nebeneinander in verschiedenen Abschnittsbereichen.

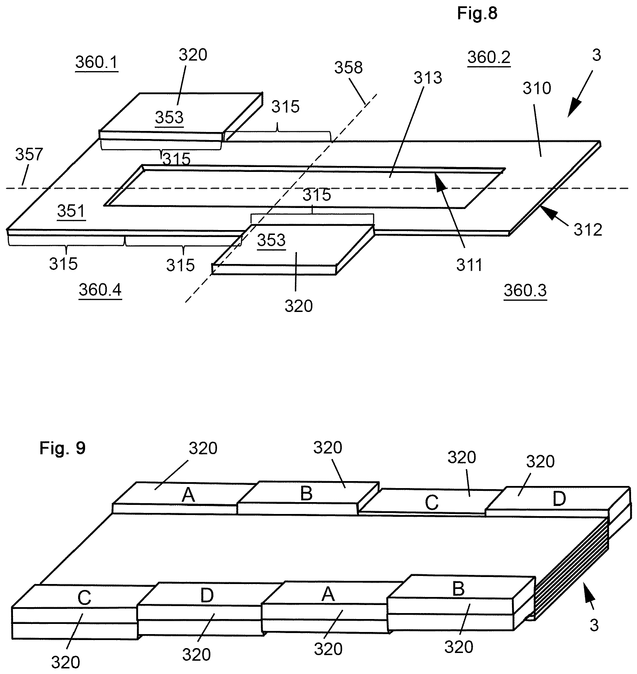

Erfindungsgemäß bevorzugt können vier Verteilerplattenbereiche durch senkrecht aufeinander stehende Symmetrieachsen des aktiven Zellraums gebildet sein und die Abschnitte des Außenrands des Zellrahmens, an denen die zwei Fluidsegmente angeordnet sind, liegen derart in verschiedenen Verteilerplattenbereichen, dass die Abschnitte des Außenrands des Zellrahmens, an denen die zwei Fluidsegmente angeordnet sind, sich durch jeweils eine 180°-Drehung um jede der Symmetrieachsen ineinander oder in benachbarte Abschnitte derselben Verteilerplattenbereiche überführen lassen. Wenn sie in benachbarte Abschnitte derselben Verteilerplattenbereiche überführt werden, sind in einem Verteilerplattenbereich also zwei oder mehr Abschnitte vorgesehen, die nicht überlappen und an denen grundsätzlich ein Fluidsegment angeordnet sein kann. Ein konkretes Beispiel für eine solche Anordnung wird später mit Bezug auf die die Fig. 8 bis 10 noch detaillierter erläutert, ohne dass der abstrakte Erfindungsgedanke, wie er hier formiert ist, auf diese Ausführungsform beschränkt sein muss. Es sind auch mehrere Abschnitte pro Verteilerplattenbereich denkbar, und andere nicht viereckige oder rechteckige bzw. quadratische Formen denkbar, bspw. mehreckige Formen (mit mehr als vier Ecken) der Zellrahmen bis hin zu ovalen oder runden Formen der Zellrahmen.

Für die vorstehend beschriebene Ausführungsform kann in Fortbildung dieses Erfindungsgedankens vorgesehen werden, dass die Höhe der Fluidsegmente maximal der Höhe der Zellrahmen multipliziert mit dem zweifachen der Anzahl der nicht überlappenden Abschnitte am Außenrand des Zellrahmens jedes der Verteilerplattenbereiche entspricht, an denen ein Fluidsegment anordenbar ist. Hierdurch wird erreicht, dass Stapel der Verteilerplatten bei geeigneter Anordnung grundsätzlich beliebig hoch stapelbar sind, wie Fig. 9 für ein konkretes Beispiel veranschaulichen kann, ohne dass der Erfindungsgedanke auf dieses konkrete Beispiel beschränkt ist.

Dieser Erfindungsgedanke kann, in einer alternativen Beschreibung, auch dadurch realisiert werden, dass die Höhe der Fluidsegmente der Höhe eines bzw. des Zellrahmens Rahmens multipliziert mit der Anzahl der zur Verfügung stehenden nicht überlappenden Bereiche (Abschnitte) am Außenrand des Zellrahmens auf einer Seite der Verteilerplatte besteht. Eine Seite der Verteilerplatte kann dabei Erfindungsgemäß als eine Sektion der Verteilerplatte aufgefasst werden, in der jeweils genau ein Fluidsegment anordenbar ist. Eine Seite ist sozusagen für eines der Fluidsegmente reserviert, wobei das Fluidsegment an dieser Seite in verschiedenen, nicht überlappenden Bereichen anordenbar ist. Hierdurch wird eine Stapelbarkeit mehrerer Verteilerplatten erreicht, obwohl die Höhe der Fluidsegmente die Höhe der Zellrahmen übersteigt. Dafür können auch mehrere verschiedene Verteilerplatten vorgesehen sein, bei denen das Fluidsegment jeweils in anderen Bereichen (Abschnitten) der Seite angeordnet ist. Besonders bevorzugt sind aber, wie vorstehend beschrieben, Verteilerplatten mit einer Symmetrie, die sich durch Drehungen um ihre Symmetrieachsen ineinander überführen lassen derart, dass das Fluidsegment in einem anderen Bereich (Abschnitt) der Seite angeordnet ist. Wenn die Verteilerplatte, wie meist üblich, zwei Fluidsegmente aufweist, weist die Verteilerplatte auch zwei Seiten (in dem vordefinierten Sinne) auf.

In einer rechteckigen Anordnung mit vier geometrischen Seiten, wie nachfolgend noch beschrieben, kann eine Seite (in dem vordefinierten Sinne) bspw. durch eine der Rahmenlängsseiten gebildet sein, was einer bevorzugten Ausführungsform entspricht. Erfindungsgemäß kann eine Seite aber auch durch eine der Rahmenquerseiten gebildet sein, oder durch jeweils eine der Rahmenlängsseite und einer Rahmenquerseiten zusammen. In diesem Fall bilden also eine Rahmenlängsseite und eine Rahmenquerseite eine Sektion der Verteilerplatte, die für ein Fluidsegment vorgesehen bzw. reserviert ist.

Eine in der Praxis bevorzugte sowie leicht herstellbare und handhabbare Ausführung der erfindungsgemäßen Verteilerplatte kann vorsehen, dass der Zellrahmen rechteckig mit verschieden langen Rahmenseiten ausgebildet ist, die Fluidführungen in den als Rahmenlängsseiten bezeichneten längeren Rahmenseiten ausgebildet sind und die Abschnitte des Außenrands des Zellrahmens, an denen die Fluidsegmente nach außen vorstehend ausgebildet sind, auch an den Rahmenlängsseiten angeordnet sind.

Für eine solche Anordnung kann vorgehsehen sein, dass an jeder Rahmenlängsseite in genau einem der Verteilerplattenbereiche des Zellrahmens genau ein Abschnitt oder genau zwei Abschnitte zum Anordnen eines Fluidsegments vorgesehen sind. Hierdurch werden ausreichend große Fluidsegmente, bezogen auf die Größe des aktiven Zellraums, ermöglicht, die einen ausreichenden Fluidstrom mit vergleichsweise niedrigem hydraulischem Widerstand und einen ausreichend langen Shuntkanal zum Erzeugen eines vergleichsweise hohen elektrischen Widerstands, um einen elektrischen Strom entlang der Fluidströmung klein genug zu halten erreichen. Gerade für die zuvor diskutierten Ausführungsformen wird durch diese Dimensionierung ein optimaler Gestaltungsspielraum definiert, den der Fachmann entsprechend konkreter Anforderungen im durch die Erfindung vorgegebenen Rahmen auszunutzen versteht.

Im Rahmen einer weiteren Optimierung von hydraulischen und elektrischen Anforderungen an den Shuntkanal kann erfindungsgemäß vorgesehen sein, dass der Shuntkanal in dem Fluidsegment eine langestreckte geschwungene Kurvenbahn beschreibt, die zwischen dem einem der Fluidkanäle und einer der Fluidführungen des Zellrahmens verläuft, wobei an einander gegenüberliegenden Enden der Kurvenbahn Kurvenumlenkungen vorgesehen sind, in denen die Kurvenbahn um vorzugsweise mindestens 90°, vorzugsweise um mindestens 180° Grad umgelenkt wird. Hierdurch wird die für einen ausreichenden elektrischen Shuntwiderstand benötigte Länge des Shuntkanals erreicht. Ferner können in dieser Ausführungsform zwei Kurvenumlenkungen an einander gegenüberliegenden Enden der Kurvenbahn durch gerade oder geschwungene Kurvenführungen verbunden sein, wobei der Strömungsquerschnitt der Kurvenbahn im Bereich der Kurvenumlenkungen größer ist als im Bereich der geraden oder geschwungenen Kurvenführungen. Der in den vergleichsweise engen Kurvenumlenkungen vergrößerte Strömungsquerschnitt führt dazu, dass trotz sich in den Randbereichen ergebenden Verwirbelungen ein effektiver Strömungsquerschnitt verbleibt, der einen mit einer eher laminaren Strömung in Bereich der geraden oder gebogenen Kurvenführungen vergleichbaren Fluiddurchsatz erlaubt.

Diese Vorteile lassen sich auch in einer erfindungsgemäßen Zellenanordnung aus zwei Verteilerplatten nutzen, wie sie vorstehend in verschiedenen, voneinander unabhängigen Varianten beschrieben wurden. Erfindungsgemäß wird die Zellanordnung dadurch gebildet, dass zwischen den Zellrahmen von zwei Verteilerplatten eine Ionenaustauschmembran derart abdichtend eingeklemmt ist, dass eine Vermischung von Fluid in der Fluidzelle der ersten der Verteilerplatten und Fluid in der Fluidzelle in der zweiten der Verteilerplatten verhindert ist, und dass auf der der Ionenaustauschmembran gegenüberliegenden Seite des Zellrahmens jeder der Verteilerplatten eine Elektrodenplatte derart abdichtend geordnet ist, dass der aktive Zellraum jeder der Verteilerplatten fluiddicht verschlossen ist, so dass über die Fluidsegmente jeder der aktiven Zellräume von dem Fluid durchströmbar ist, wobei eine Verbindungseinrichtung vorgesehen ist, die zum Ausüben eines Verbindungsdrucks auf die aufeinander liegenden Zellrahmen mit der Ionenaustauschmembran und den Elektrodenplatten ausgebildet ist. Der Verbindungsdruck ist ausreichend, um eine abdichtende Verbindung zu erreichen. Ein solche Verbindungseinrichtung kann ein Klemmen, Schweißen, Kleben oder vergleichbare geeignete, insbesondere kraftschlüssige oder materialschlüssige Verbindung (bspw. durch Erhitzen, Verschmelzen und/oder chemische Prozesse, wie Komponentendichtungen) vorsehen.

Erfindungsgemäß kann die Ionenaustauschmembran in eine Dichtung integriert sein, die auf die Oberseite des Zellrahmens und der Fluidsegmente jeder der zwei Verteilerplatten auflegbar ist, wobei jeweils die Oberseiten der Zellrahmen und der Fluidsegmente jeder der zwei Verteilerplatten einander zugewandt angeordnet sind. Eine in diesem Sinne in die Dichtung integrierte Ionenaustauschmembran kann als ein einteiliges Bauelement mit Dichtung und Ionenaustauschmembran ausgebildet sein, was eine besonders einfach Handhabung ermöglicht. Der Begriff "integriert" ist aber nicht in diesem Sinne beschränkt zu verstehen, sondern eher funktional, dass die Dichtung und die Ionenaustauschmembran in dem Sinne zusammenwirken, dass ein Fluiddurchtritt im Bereich der einer zugewandt liegenden Oberseiten der Verteilerplatten ("aufeinanderliegende Verteilerplatten") durch ein Zusammenwirken von Dichtung und Ionenaustauschmembran zuverlässig verhindert wird, durch die Ionenaustauschmembran aber ein Ionenaustauch zwischen den aktiven Zellen der beiden Verteilerplatten möglich ist. Dies lässt auch durch eine zu der Ionenaustauschmembran zusätzlichen Dichtung und/oder eine mehrteilige Dichtung mit oder ohne einteilig verbundener Ionenaustauchmembran erreichen.

Ein erfindungsgemäßer Stapel aus mehreren solcher Zellenanordnungen mit den vorbeschriebenen Verteilerplatten kann dadurch gebildet werden, dass mehrere Zellenanordnungen übereinander in einem Stapel angeordnet sind, wobei die Elektrodenplatten zwischen zwei benachbarten Zellanordnungen vorzugsweise als Bipolarplatten ausgebildet sind, mit denen Elektroden unterschiedlicher Polung für die Zellenanordnungen erreicht werden können.

Aufgrund der erfindungsgemäß unterschiedlichen Höhe von Zellrahmen und Fluidsegmenten der Verteilerplatten sind die oberen und unteren Ende eines Stapels aus mehreren Verteilerplatten meist nicht plan, wie die schematischen Fig, 3b, 4b und 9 der Figurenbeschreibung verdeutlichen. Um dies auszugleichen, und die aktiven Zellräume und die Fluidkanäle in den Verteilerplatten am oberen und unteren Ende eines Stapels abzuschließen, können erfindungsgemäß entsprechend in der Form angepasste Stapelendplatten (auch als Grundplatte oder Isolationsplatte bezeichnet) vorgesehen sein, die den Höhenversatz der Fluidsegmente (mit den Shuntkanälen) relativ zueinander ausgleichen und/oder zu dem Zellrahmen ausgleichen. Diese Stapelendplatten können das abdichtende Abschließen der aktiven Zellräume, insbesondere mittels einlegbarer oder integrierter Elektrodenplatten und/oder Dichtungen, als auch einen abdichtenden Anschluss oder Abschluss an die in den Fluidsegmenten ausgebildeten Fluidkanäle, ggf. unter Zwischenlegen von oder mittels integrierter Dichtungen, erreichen.

Weitere Merkmale, Vorteile und Anwendungsmöglichkeiten der Erfindung ergeben sich auch aus der nachfolgenden Beschreibung von Ausführungsbeispielen und der Zeichnung. Alle dort beschriebenen und/oder dargestellten Merkmale gehören zum Gegenstand der Erfindung, auch unabhängig von ihrer Zusammenfassung in den einzelnen Ausführungsformen und/oder in den Ansprüchen oder deren Rückbezügen.

Es zeigen:
- Fig. 1: schematisch die Oberseite einer erfindungsgemäßen Verteilerplatte gemäß einer ersten Ausführungsform in der Draufsicht;
- Fig. 1a: schematisch die Längsseite der erfindungsgemäßen Verteilerplatte gemäß Fig. 1 in der Seitenansicht;
- Fig. 1b: schematisch die Querseite der erfindungsgemäßen Verteilerplatte gemäß Fig. 1 in der Seitenansicht;
- Fig. 2: schematisch die Unterseite der erfindungsgemäßen Verteilerplatte gemäß einer ersten Ausführungsform in der Draufsicht;
- Fig. 2a: schematisch die Längsseite der erfindungsgemäßen Verteilerplatte gemäß Fig. 2 in der Seitenansicht;
- Fig. 2b: schematisch die Querseite der erfindungsgemäßen Verteilerplatte gemäß Fig. 2 in der Seitenansicht;
- Fig. 3a: schematisch die Längsseite einer Ausführungsform einer erfindungsgemäßen Zellenanordnung aus zwei erfindungsgemäßen Verteilerplatten gemäß den Fig. 1 und 2 in der Seitenansicht;
- Fig. 3b: schematisch die Querseite der erfindungsgemäßen Zellenanordnung aus Fig. 3a aus zwei erfindungsgemäßen Verteilerplatten gemäß den Fig. 1 und 2 in der Seitenansicht;
- Fig. 4a: schematisch die Längsseite einer Ausführungsform eines erfindungsgemäßen Stapels aus zwei erfindungsgemäßen Zellenanordnungen gemäß Fig. 3a in der Seitenansicht;
- Fig. 4b: schematisch die Querseite des erfindungsgemäßen Stapels aus Fig. 4a aus zwei erfindungsgemäßen Zellenanordnungen gemäß Fig. 3b in der Seitenansicht;
- Fig. 5: schematisch die Oberseite einer erfindungsgemäßen Verteilerplatte gemäß einer zweiten Ausführungsform in der Aufsicht;
- Fig. 6: schematisch eine Ausführungsform einer erfindungsgemäßen Zellenanordnung mit zwei Verteilerplatten gemäß Fig. 5 in einer Explosionsdarstellung;
- Fig. 7: eine Fluidführung einer erfindungsgemäßen Verteilerplatte gemäß einer bevorzugten Ausführungsform;
- Fig. 8: schematisch die Unterseite einer erfindungsgemäßen Verteilerplatte gemäß einer dritten Ausführungsform in der dreidimensionalen Ansicht;
- Fig. 9: schematisch eine Ausführungsform eines erfindungsgemäßen Stapels aus vier Zellenanordnungen mit Verteilerplatten gemäß Anspruch 8; und
- Fig. 10.: schematisch den Stapel gemäß Fig. 9 in einer Draufsicht von oben.

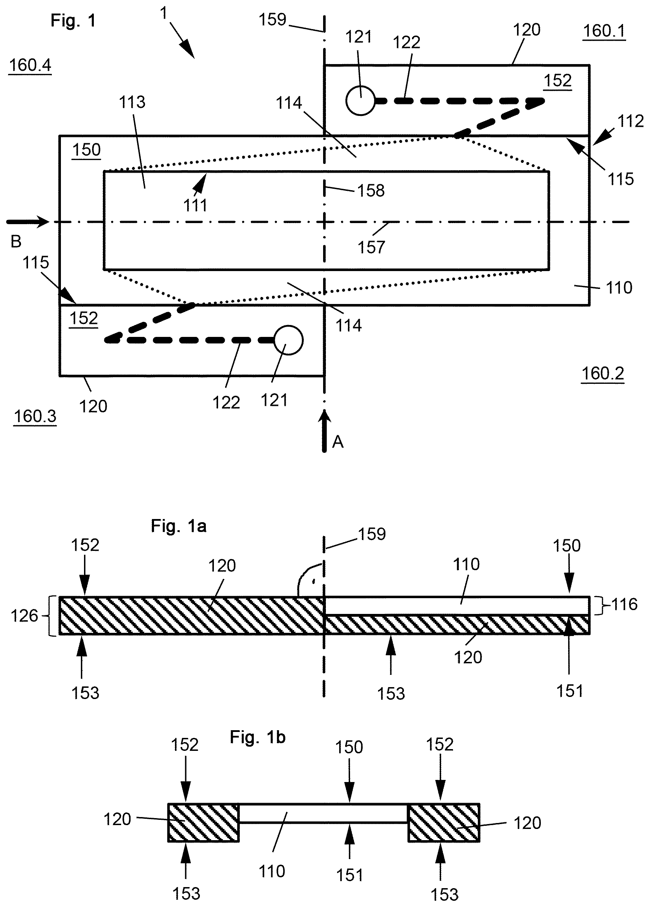

In Fig. 1 wird schematisch die Oberseite einer erfindungsgemäßen Ausführungsform einer Verteilerplatte 1 für ein Fluid zum Ausbilden einer Fluidzelle eines mindestens eine erste und eine zweite Fluidzelle aufweisenden Energiespeichers zum Speichern elektrischer Energie gezeigt. Ein solcher Energiespeicher kann insbesondere eine Redox-Flow Batterie oder eine Wasserstoffzelle bzw. Brennstoffzelle sein. Typisch für einen solchen fluidbetrieben Energiespeicher sind zwei über eine Membran verbundene Fluidzellen (häufig auch als Halbzellen der Energiespeicherzelle bezeichnet), die von zwei verschiedenen Fluiden durchströmt werden. Durch eine Membran (Ionenausaustauschmembran) tauschen die Fluide im Zuge einer chemischen Reaktion Ionen aus. Bei dieser chemischen Reaktion wird elektrische Energie freigesetzt, ohne dass sich die Fluide miteinander mischen. Die Ionenaustauschmembran dichtet die beiden Fluidzellen also fluiddicht ab.

Dazu weist die Verteilerplatte 1 einen Zellrahmen 110 auf, dessen Innenrand 111 einen aktiven Zellraum 113 umschließt und in dem zwei Fluidführungen 114 ausgebildet sind, von denen eine für das Einleiten des Fluids in den aktiven Zelleraum 113 und die andere für das Ausleiten des Fluids aus dem aktiven Zellraum 113 vorgesehen sind. Ferner sind an der Verteilerplatte 1 zwei Fluidsegmente 120 mit jeweils einem als Durchgangsöffnung durch die Verteilerplatte ausgebildeten Fluidkanal 121 zum Anschluss an ein (nicht dargestelltes) Fluidreservoir und mit jeweils einem Shuntkanal 122, der zwischen jeweils einem Fluidkanal 121 und jeweils einer der beiden Fluidführungen 114 ausgebildet ist, vorgesehen. Der Shuntkanal 122 ist eine nach speziellen Kriterien ausgebildete Fluidführungsströmung, die in Fig. 1 nur schematisch als gestrichelte Linie eingezeichnet ist und nicht den tatsächlichen Verlauf der Fluidführungsströmung zeigt, die in einer bevorzugten Ausführungsform einer geschwungenen Kurvenbahn folgt, die später noch ausführlicher erläutert wird.

Erfindungsgemäß können der Zellrahmen 110 und die Fluidsegmente 120 einteilig in der Verteilerplatte 1 ausgeführt sein, wobei der Übergang (Übergangsbereich) von dem Zellrahmen 110 auf das Fluidsegment 120 auch als Abschnitt 115 des Außenrands 112 des Zellrahmens 110 bezeichnet wird. Gemäß der Erfindung ist vorgesehen, dass jedes der Fluidsegmente 120 von einem Abschnitt 115 des Außenrands 112 des Zellrahmens 110 nach außen vorstehend ausgebildet sind. Mit anderen Worten sind die Fluidsegmente 120 erfindungsgemäß also außerhalb des Zellrahmens 110 angeordnet.

Fig. 1 ist eine Darstellung der Oberseite 150 des Zellrahmens 110 und der Oberseite 152 des Fluidsegments 120. In den Oberseiten 150, 152 sind vorzugsweise als zur Oberseite 150, 152 offene Vertiefungen die Fluidführungen 114 und die Shuntkanäle 122 ausgebildet. Der Fluidkanal 121 ist eine vorzugweise runde oder abgerundete Durchgangsöffnung, die sich von der Oberseite 152 bis zur Unterseite 153 des Fluidsegments 120 erststreckt. Über den Fluidkanal 121 ist der aktive Zellraum 113 an ein Fluidreservoir anschließbar, so dass Fluid über den Fluidkanal 121 durch den Shuntkanal 122 des einen der beiden Fluidsegmente 120 und die Fluidführung 114 in den aktiven Zellraum 113 einströmen und durch die gegenüberliegenden Fluidführung 114 des Zellrahmens 110 sowie den Shuntkanal 122 und den Fluidkanal 121 des anderen der beiden Fluidsegmente 120 wieder ausströmen kann, bspw. indem das Fluid außerhalb der Verteilerplatte 1 mittels einer Pumpe unter Druck gesetzt wird.

Um einen elektrischen Stromfluss durch das (aufgrund von enthaltenen Ionen) elektrisch leifähige Fluid entlang des Fluidkanals bzw. der gesamten Fluidströmung zu minimieren, wird durch den Shuntkanal eine möglichst lange Fluidströmungsführung in den Fluidsegmenten vorgesehen, weil der elektrische Widerstand mit der Strömungslänge des Fluidströmungswegs zunimmt, entlang dem der elektrische Strom in dem Fluid fließt. Mit der Strömungslänge des Fluids nimmt aber auch der hydraulische Widerstand bei der Strömung des Fluids zu. Insbesondere bei der vergleichsweise geringen Höhe der Verteilerplatten bzw. der Zellrahmen, mit der der umbaute Raum für das Vorsehen der aktiven Zelle in dem Energiespeicher klein gehalten werden soll, ergibt sind im Stand der Technik eine entsprechend geringe Kanalhöhe des Shuntkanals, bei der der Einfluss der Randbereiche als hydraulischer Widerstand besonders groß wird. Der hydraulisch wirksame (effektive) Strömungsquerschnitt wird bei im Vergleich zur Kanalbreite signifikant kleineren Kanalhöhe deutlich reduziert. Im Gegensatz zu einem verkleinerten wirksamen (effektiven) Strömungsquerschnitt kann der fließende Strom (d.h. der unerwünschte Shuntstrom) den gesamten Querschnitt des Strömungskanals ausnutzen. Mit anderen Worten wird der (erwünschte) elektrische Widerstand in solchen Shuntkanälen mit niedriger Kanalhöhe im Vergleich zur Kanalbreite effektiv weniger erhöht als der (unerwünschte) hydraulische Widerstand (auch als Strömungswiderstand bezeichnet). Dieser vergleichsweise große hydraulische Widerstand führt zu einem erhöhten Fluiddruck, mit dem das Fluid beaufschlagt werden muss, damit es mit dem benötigten Massestrom durch die Verteilerplatte respektive dessen aktive Zelle strömen kann.

Strömungstechnisch optimal wären Shuntkanäle mit einem Verhältnis von etwa 1 zwischen Höhe des Shuntkanals und Breite des Shuntkanals. Bei runden Strömungsquerschnitten und laminarer Strömung (in geraden oder schwach gebogenen kurvigen Abschnitten) wäre also ein kreisförmiger Querschnitt des Shuntkanals optimal, in dem der elektrisch und der hydraulisch wirksame Widerstand sich in etwa gleich verhalten. In die Nähe kommen auch Anordnungen mit näherungsweise quadratischen Strömungsquerschnitten zumindest in Strömungsbereichen mit einer laminaren Strömung mit nur minimalen hydraulischen Verwirbelungen an den Kanalrändern. In Bereichen mit Verwirbelungen der Fluidströmung, bspw. an Kanten oder in Kurven mit starker Umlenkung, liegt ein Optimum entsprechend der Lehre der vorliegenden Erfindung meist im Bereich eines bei gegebener Kanalhöhe definierten effektiven hydraulischen Strömungsquerschnitt mit einem Verhältnis von etwa 1 zwischen Höhe und Breite des Shuntkanals, wobei der Bereich des effektiven Strömungsquerschnitts der Teile der Strömungskanals ist, in dem sich keine Verwirbelungen ausbilden bzw. mit anderen Worten eine de facto laminare Strömung ausbildet.

Für einen Energiespeicher können mehrere Energiespeicherzellen mit den beschriebenen ersten und zweiten Fluidzellen übereinander als Stapel oder Stack angeordnet werden. Hierfür ist es sinnvoll, die Zellrahmen möglichst niedrig (dünn, d.h. mit einer bezogen auf die Länge und Breite des Zellrahmens, mit der die Grundfläche der aktiven Zelle definiert ist, kleinen Höhe des Zellrahmens) aufzubauen und die gesamte Fluidströmungsführung mit in die Verteilerplatte zu integrieren, d.h. auch die Fluidsegmente mit dem Shuntkanal und dem Fluidkanal einteilig in die Verteilerplatte zu integrieren. Dies stellt ein besonders bevorzugtes Anwendungsgebiet der vorliegenden Erfindung dar.

Bei Verteilerplatten mit vergleichsweise niedriger Höhe ergeben sich dann aber nur sehr geringe Querschnitte bei Shuntkanälen mit näherungsweise rundem oder quadratischen Querschnitt, mit dem sich der erforderliche Fluidmassestrom nicht erreichen lässt. Eine naheliegende Möglichkeit wäre es, ausgehend von den bekannten Verteilerplatten die Shuntkanäle und Fluidkanäle in eine externe Medienverteilung zu integrieren, d.h. die Fluidsegmente von den Verteilerplatten zu trennen. In einer solchen Anordnung könnten die Kanalquerschnitte des Shuntkanals entsprechend dem vorbeschriebenen Optimum frei gewählt werden. Allerdings wird dann der für den Energiespeicher benötigte Bauraum um ein Vielfaches größer. Ein externer Medienverteiler benötigt auch zusätzliche Dichtebenen und Bauteile, was die Kosten erhöht und die Prozesssicherheit vermindert.

Die Erfindung schlägt hier eine andere Lösung vor, mit der die vorbeschriebenen Nachteile vermieden werden.

Es ist erfindungsgemäß vorgesehen, die Fluidsegmente 120 jeweils von einem Abschnitt 115 des/eines Außenrands 115 des Zellrahmens 110 nach außen vorstehend anzuordnen, wobei die Höhe 126 der Fluidsegmente 120 vorzugsweise mindestens dem Doppelten der Höhe 116 des Zellrahmens 110 entspricht, zumindest aber höher ist. Dies ist in den Seitenansichten Fig. 1a und 1b der Verteilerplatte 1 gemäß Fig. 1 gezeigt, wobei Fig. 1a die Seitenansicht aus Richtung A (Fig. 1) auf die (längere) Längsseite der Verteilerplatte 1 und Fig. 1b die Seitenansicht aus Richtung B (Fig. 1) auf die (kürzere) Längsseite der Verteilerplatte 1 zeigen.

In dem dargestellten bevorzugten Ausführungsbeispiel beträgt die Höhe 126 des Fluidsegments 120 gerade genau dem Doppelten der Höhe 116 des Zellrahmens 110. Dies erlaubt in etwa eine Verdopplung der Höhe des Shuntkanals 122 in dem Fluidsegment 120. Bei einem strömungshydraulisch optimierten Verhältnis von 1 aus Höhe zu Breite des Shuntkanals ergibt sich damit ein um den Faktor 4 vergrößerter Strömungsquerschnitt und damit Massestrom des Fluids bei gleichem Fluiddruck.

Bei entsprechend geeigneter Anordnung der Abschnitte 115 an dem Zellrahmen 110, von denen die Fluidsegmente 120 nach außen von dem Zellrahmen 110 vorstehen, sind mehrere Verteilerplatten 1 im Bereich der Zellrahmen 110 derart stapelbar, dass die Zellrahmen 110 jeweils zweier Verteilerplatten 1 direkt aufeinanderliegend angeordnet werden können.

In dem dargestellten Beispiel sind die Fluidführungen 114 in dem Zellrahmen 110 an der Oberseite 150 des Zellrahmens 110 und der Shuntkanal 122 an der Oberseite 152 jedes der Fluidsegmente 120 ausgebildet, bspw. durch in die Oberfläche von Zellrahmen 110 und Fluidsegment 120 eingebrachte Vertiefungen mit rechteckigem, quadratischen, rundem, ovalen oder ggf. abschnittsweise abgerundeten quadratischen Querschnitt, etwa in Form einer Nut. Insbesondere der Übergang zwischen Nutseiten und Nutboden kann zur Annäherung an einen runden Querschnitt auch abgerundet ausgebildet sein, um Kanten an dem Übergang zu vermeiden, an denen sich Verwirbelungen ausbilden können, bspw. weil in den Kanten die Strömungsgeschwindigkeit des Fluids abnimmt.

Die oberen freien Ränder der Fluidführungen 114 und die oberen freien Ränder der Shuntkanäle 122 bilden eine gemeinsame Oberflächenebene von Zellrahmen und Fluidsegmenten, also der gesamten Verteilerplatte 1. Diese Oberflächenebene ist durch die gemeinsamen planen Oberseiten 150 und 152 des Zellrahmens 110 respektive des Fluidsegments 120 bestimmt. Diese gemeinsame Oberflächenebene definiert die obere Begrenzung des aktiven Zellraums 113, wenn dieser Zellraum 113 - wie in einem Energiespeicher üblich - an der Oberseite 150 des Zellrahmens 110 abgedichtet ist bzw. wird (wobei ggf. eine Dicke der Abdichtung, bspw. der Ionenaustauschmembran, nicht berücksichtigt bzw. vernachlässigt wird).

Aufgrund der erfindungsgemäß unterschiedlichen Höhe von Zellrahmen 110 und Fluidsegmenten 120 bilden in dem hier beschriebenen bevorzugten Ausführungsbeispiel die Unterseite 151 des Zellrahmens 110 der Verteilerplatte 1 und die Unterseite 153 der Fluidsegmente 120 der Verteilerplatte 1 keine gemeinsame Unterflächenebene aus, sondern jeweils eigene Unterflächenebenen, die vorzugsweise je parallel zueinander und weiter vorzugsweise auch parallel zu der gemeinsamen Oberflächenebene ausgerichtet sind. In dieser Ausführungsform mit einer gemeinsamen Oberflächenebene steht also die Unterseite 153 des Fluidsegments 120 über die Unterseite 151 des Zellrahmens 110 hinaus.

Dies ist in den Seitenansichten von Fig. 1a und 1b deutlich zu erkennen.

Die Unterseite 151 des Zellrahmens 110 definiert, in entsprechender Weise zu der Oberseite 150 des Zellrahmens 110, durch die Unterflächenebene des Zellrahmens 110 die untere Begrenzung des aktiven Zellraums 113, wenn dieser Zellraum 113 an der Unterseite 151 des Zellrahmens 110 abgedichtet ist, bspw. durch eine Elektrode oder Bipolarplatte.

Vorzugsweise sind die Unterseite 151 des Zellrahmens 110 und/oder die Unterseite 153 des Fluidsegments 120 plan ausgebildet und/oder weisen eine plane Dichtfläche auf. Plan ausgebildet schließt auch Varianten ein, in denen bspw. eine Führung zur Fixierung bspw. eines Dichtelements vorgesehen oder ein Dichtelement auf der Unterseite von Zellrahmen und/oder Fluidsegment angebracht sind mit der Folge, dass - ggf. unter Zwischenlegen einer Dichtung - eine Abdichtung gegen eine plane Fläche möglich ist.

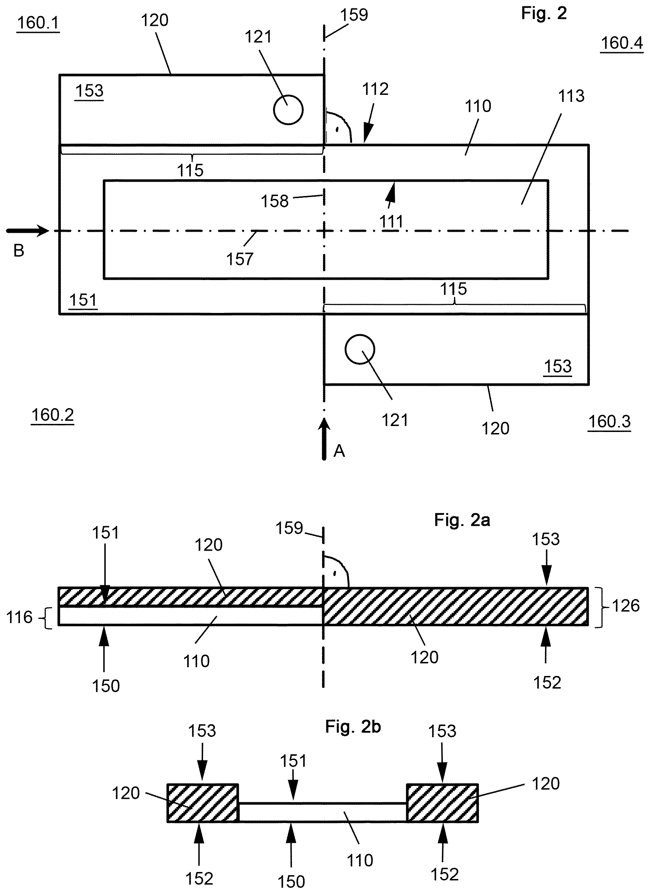

Fig. 2 zeigt eine Ansicht der Verteilerplatte 1 von unten, also auf die Unterseite 151 des Zellrahmens 110 und die Unterseite 153 der Fluidsegmente 120. Fig. 2a und 2b sind die den Fig. 1a und 1b entsprechenden Seitenansichten.

Den Fig. 1a und 1b bzw. den Fig. 2a und 2b ist zu entnehmen, dass die Unterseite 153 der Fluidsegmente 120 über die Unterseite 151 des Zellrahmens 110 hinaussteht. Dabei ragt der über die Unterseite 151 des Zellrahmens 110 hinausstehende Teil der Fluidsegmente 120 nicht über eine Abschnittsbegrenzungsebene 159 hinaus. Diese Abschnittsbegrenzungsebene 159 steht senkrecht auf der Unterseite 151 des Zellrahmens 110 (Fig. 2a) und senkrecht auf dem Außenrand 112 des Zellrahmens 110 (Fig. 2). Die Fluidsegmente 120 ragen also auch nach außen nicht über die an dem Zellrahmen 110 definierten Abschnitte 115 hinaus.

Dies ermöglicht, dass eine um eine der Symmetrieachsen 157, 158 der aktiven Zelle 113 um 180° gedrehte Verteilerpatte 1 mit einer nicht gedrehten Verteilerplatte 1 auch Unterseite an Unterseite derart gestapelt werden können, dass die Unterseiten 151 Zellrahmen 110 beider Verteilerplatten 1 aufeinander liegen, ohne dass die Fluidsegmente 120 sich überschneiden (was ein derartiges Zusammenfügen bzw. Stapeln verhindern würde). Dies lässt sich allgemeiner ausgedrückt auch so beschreiben, dass die Teile der Fluidsegmente 120, die über die Unterseite 151 des Zellrahmens 110 hinausstehen, in Projektion auf eine durch die Unterseite 151 des Zellrahmens 110 definierte Unterfläche nicht über die Abschnittsgrenze 159 hervorragen.

Die Symmetrieachsen 157, 158 der aktiven Zelle 113 stehen in einem Symmetriepunkt der aktiven Zelle 113 senkrecht aufeinander und liegen in einer zur Oberseite 150 (entsprechend auch Unterseite 151) des Zellrahmes 110 parallelen Ebene in der halben Höhe des Zellrahmens 110. In dem dargestellten Beispiel eines rechteckigen Zellrahmens 110 mit entsprechend rechteckigem aktiven Zellraum 113 sind dies eine Längssymmetrieachse 157, welche parallel zur Länge / Längsseite des Zellrahmens 110 verläuft und dessen Breite / Querseite in der Mitte schneidet, und eine Quersymmetrieachse 158, welche parallel zur Breite / Querseite des Zellrahmens 110 verläuft und dessen Länge / Längsseite in der Mitte schneidet. Bei anders geformten Zellrahmen gilt entsprechendes.

Die Symmetrieachsen 157, 158 des aktiven Zellraums 113 bilden vier Verteilerplattenbereiche 160.1, 160.2, 160.3 und 160.4, die in Fig. 1 und Fig. 2 eingezeichnet sind, unter der Annahme, dass Fig.2 durch Drehung um 180° um die Quersymmetrieachse 158 gebildet wurde. Da eine genaue Identifikation des Verteilerplattenbereichs 106.1, 106.2, 106.3 und 160.4 in der Regel nicht notwendig ist, werden Verteilerplattenbereiche nachstehend auch mit dem Bezugszeichen 160.X gekennzeichnet. In dieser Ausführungsform liegen die Abschnitte 115 des Außenrands 112 des Zellrahmens 110, an denen die zwei Fluidsegmente 120 angeordnet sind, in verschiedenen Verteilerplattenbereichen 160.X derart, dass die Abschnitte 115 des Außenrands 112 des Zellrahmens 110, an denen die zwei Fluidsegmente 120 angeordnet sind, sich durch jeweils eine 180°-Drehung um jede der Symmetrieachsen 157, 158 überführen lassen. Mit anderen Worten sind die Fluidsegmente 120 derart an der Verteilerplatte 1 vorgesehen, dass sich die Verteilerplatte 1 durch Drehung um jeweils 180° um jede der Symmetrieachsen 157, 158 ineinander überführen lässt.

Wenn die Höhe 126 der Fluidsegmente 120 maximal bzw. genau (wie in dem hier dargestellten Ausführungsbeispiel) dem zweifachen der Anzahl der nicht überlappenden Abschnitte 115 am Außenrand 112 des Zellenrands 110 in jedem der Verteilerplattenbereiche 160.X entspricht, an den ein Fluidsegment 120 ausgebildet ist, lassen sich die Verteilerplatten 1 in beliebiger Höhe stapeln, wie nachstehend erläutert.

Wenn in einem solchen Stapel jeweils Verteilerplatten 1 existieren, bei denen an einem der Abschnitte 115 eines der Verteilerplattenbereiche 160.X ein Fluidsegment 120 (Verteilerabschnitt 160.1 gemäß Fig. 1 oder 2) und an jedem der durch die beschriebene Drehung um jede der Symmetrieachsen 158, 159 entsprechenden Abschnitt 115 des entsprechenden Verteilerplattenbereichs 160.X ein weiteres Fluidsegment 120 (Verteilerabschnitt 160.3 gemäß Fig. 1 oder 2) angeordnet sind, kann die doppelte Anzahl derart ausgebildeter Verteilerplatten 1 übereinander gestapelt werden, ohne dass es zu Kollisionen der Fluidsegmente 120 kommt. Solche Stapel lassen sich dann wiederholt aufeinander stapeln.

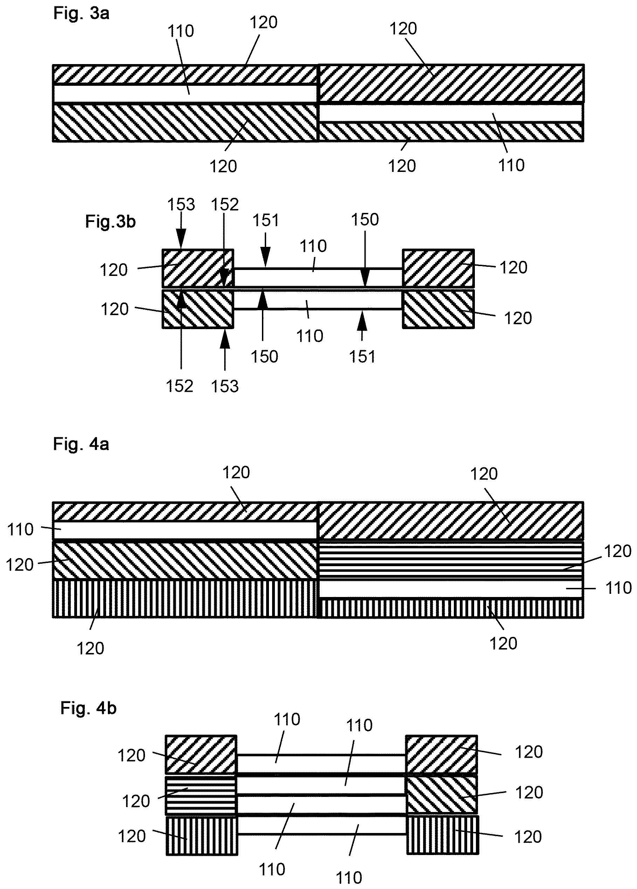

Diese Stapelbarkeit der Verteilerplatte 1 ist anhand der Fig. 3a und 3b zunächst für zwei Verteilerplatten 1 nachvollziehbar, ausgehend von den Seitenansichten der Fig. 1a und 1b für eine erste Verteilerplatte 1 und eine um 180° um nur eine der beiden Symmetrieachsen 157, 158 gedrehten Verteilerplatte 1, wie in den Fig. 2a und 2b dargestellt.

Wenn diese beiden Verteilerplatten 1 jeweils mit ihren gemeinsamen Oberflächenebenen (entsprechend den Oberseiten 150-152) einander zugewandt zusammengefügt werden (wie weiter unten noch ausführlicher beschrieben unter Zwischenlegung einer abdichtenden Ionenaustauschmembran), ergeben sich die Seitenansichten dieser zusammengefügten Verteilerplatten gemäß Fig. 3a (Seitenansicht der Längsseite) und Fig. 3b (Seitenansicht der Querseite). Fig. 3b zeigt die jeweils mit ihrer Oberseite 150 einander zugewandten Zellrahmen 110. Gleiches gilt für die mit ihren Oberseiten 152 einander zugewandten Fluidsegmenten 120. Die Unterseiten 151, 153 von Zellrahmen 110 und Fluidsegmenten 120 befinden sich auf den jeweils einander abgewandten Seiten. Fig. 3a zeigt in der Seitenansicht entsprechendes.

Eine solche erfindungsgemäße Zellenanordnung aus zwei Verteilerplatten 1 (mit zwischengelegter Ionenaustauschmembran) bildet eine Fluidzelle des Energiespeichers, wobei die jeweiligen Unterseiten 151 der Zellrahmen 110 zur Ausbildung eines jeweils geschlossenen aktiven Zellraums 113 auch jeweils geeignet abgedichtet sind. Auch dies wird später anhand eines konkreten Ausführungsbeispiels noch eingehender geschrieben.

Fig. 3a zeigt dieselbe Anordnung in der Seitenansicht der Längsseite. Die obere Hälfte zeigt die obere Verteilerplatte 1 und die untere Hälfte zeigt die untere Verteilerplatte 1.

An dieser Stelle sei darauf hingewiesen, dass die Streifenmuster in den Fluidsegmenten nicht - wie in technischen Zeichnungen an sich üblich - eine Schnittdarstellung sind. Die unterschiedlich gerichteten Streifenmuster (Schraffuren) dienen lediglich der Unterscheidung der verschieden in einem Stapel angeordneten Verteilerplatten, d.h. jede Richtung der Schraffur kennzeichnet eine verschiedene Verteilerplatte 1 aus der Verteilerplattenanordnung bzw. dem Stapel.

Wenn nun zwei Zellenanordnungen entsprechend Fig. 3a bzw. 3b an den Unterseiten 151, 153 von Zellrahmen 110 und Fluidsegment 120 zusammengefügt werden, ergibt sich die in Fig. 4a und 4b gezeigte Stapelanordnung, bei der die vier Zellrahmen 110 aufeinanderliegend angeordnet sind und die Fluidsegmente 120 sich entsprechend der beschriebenen Anordnung an den verschiedenen Abschnitten 115 des Zellrahmens 110 zu einer verzahnten Anordnung zusammenfügen, ohne dass die Fluidsegmente 120 beim Zusammenfügen miteinander kollidieren. Es entsteht also eine Stapelanordnung aus zwei Zellenanordnungen.

Die Ansichten von Fig. 4a und 4b entsprechen den Ansichten von Fig. 3a und 3b.

Wie Fig. 1 zeigt, ist der Zellrahmen 110 in der hier beschriebenen Ausführungsform rechteckig mit verschieben langen Rahmenseiten ausgebildet. Die Fluidführungen 114 sind in den als Rahmenlängsseiten bezeichneten längeren Rahmenseite ausgebildet. Auch die Abschnitte 115 des Außenrands 112 des Zellrahmens 110, an denen die Fluidsegmente 120 nach außen vorstehend ausgebildet sind, sind an den Rahmenlängsseiten ausgebildet. In dieser Ausführungsform sind an der kürzeren Rahmenquerseite keine Abschnitte ausgebildet, an dem ein Fluidsegment angeordnet ist. An jeder Rahmenlängsseite ist in genau einem der Verteilerplattenbereiche 160.X des Zellrahmens genau ein Abschnitt 115 zum Anordnen eines Fluidsegments 120 vorgesehen, nämlich genau ein Abschnitt 115 in dem Bereich 160.1 und ein Abschnitt 115 in dem Bereich 160.3

Grundsätzlich können die Zellrahmen der Verteilerplatten verschiedene Formen aufweisen, insbesondere wenn die Fluidsegmente entsprechend an die jeweilige Form des Außenrands des Zellrahmens in dem jeweiligen Abschnitt angepasst werden. Auch hierbei lässt sich die Erfindung umsetzen, die Fluidsegmente entsprechend höher auszugestalten, um das Verhältnis von Höhe zu Breite in Shuntkanal möglichst nah an den strömungsoptimierten Wert von 1 anzunähern.

Wenn die energetischen Eigenschaften des elektrischen Energiespeichers möglichst in jeder Verteilerplatte gleich sein sollen, ist es sinnvoll eine Konstruktion zu wählen, in der alle Fluidsegmente und alle Verteilerplatten denselben Aufbau aufweisen. Hierfür bieten sich Formen von Zellrahmen und dadurch definierten aktiven Zellräumen an, die sich durch Rotation um eine Achse durch ihren geometrischen Mittelpunkt bei einer Drehung von jeweils 90° oder jeweils 180° symmetrisch aufeinander abbilden.

Ein quadratischer oder runder Zellrahmen bilden den Zellrahmen und den aktiven Zellraum nach einer Drehung von 90° aufeinander ab und sind für die Realisierung der Erfindung daher geeignet. Bei während der Energierückgewinnung aus dem Energiespeicher von einem Fluid durchströmten Energiespeicher, bspw. bei Redox-Flow-Batterien oder Wasserstoffzellen, hat sich gezeigt, dass der zum Aufrechterhalten der Strömung des Fluids in einer Zelle benötigte Druck auf das Fluid mit der Länge des kürzesten Strömungswegs wächst. Um diesen benötigten Druck so klein wie möglich zu halten, schlägt die Erfindung rechteckige Zellrahmen vor, bei denen das Ein- und Ausleiten des Fluids im Mittelbereich der längeren Rahmenseite (Rahmenlängsseite) erfolgt. Dies in den Fig. 1 bis 4 dargestellt und stellt eine besonders bevorzugte Ausführungsform der Erfindung dar.

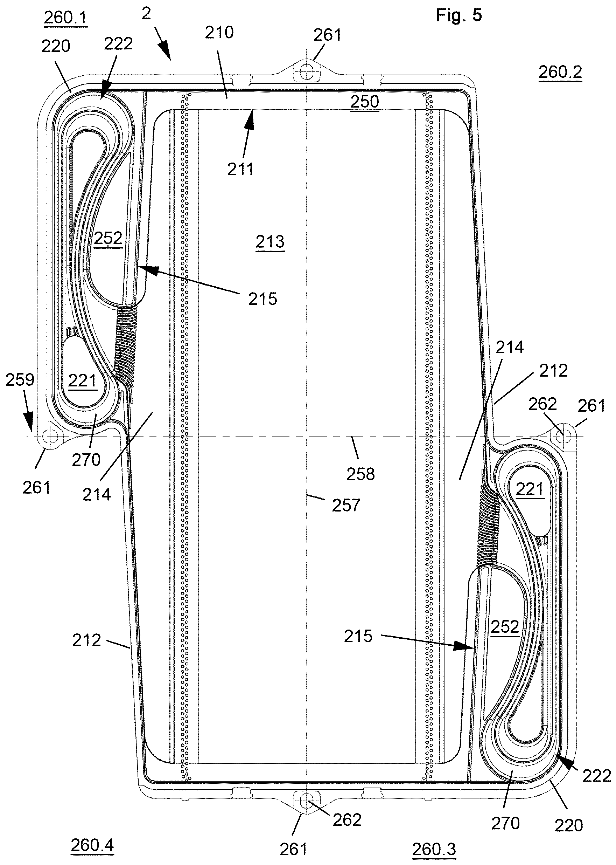

In Fig. 5 ist eine Verteilerplatte 2 zum Ausbilden einer Fluidzelle eines als Redox-Flow-Batterie ausgebildeten Energiespeichers in der Aufsicht auf die Oberseite 250 des Zellrahmens 210 und die Oberseite 252 der beiden Fluidsegmente 220 dargestellt. Der Aufbau der Verteilerplatte 2 entspricht schematisch dem Aufbau der Verteilerplatte 1. Die in diesem Zusammenhang beschriebenen Merkmale und Vorteile gelten entsprechend und werden an dieser Stelle nicht wiederholt.

Insbesondere zeigt die Verteilerplatte 2 auch einen im wesentlichen rechteckigen Aufbau des Zellrahmens 210, dessen Innenrand 211 den ebenso rechteckigen aktiven Zellraum 213 umgibt. Zwischen den Fluidsegmenten 220 und dem aktiven Zellraum 213 ist eine Fluidführung 214 zum möglichst gleichmäßigen Ein- und Ausleiten der Fluidströmung in den und aus dem aktiven Zellraum 213 als Vertiefung in der Oberseite 250 des Zellrahmens 210 ausgebildet. Die Fluidsegmente 220 sind jeweils an dem Außenrand 212 in Abschnitten 215 ausgebildet, die jeweils an Längsseiten des Zellrahmens 210 liegen. Die Abschnitte finden sich den der Verteilerplattenbereichen 260.1 und 260.3, die durch die Längssymmetrieachse 257 und die Quersymmetrieachse 258 definiert bzw. abgegrenzt werden. In den Verteilerplattenbereichen 160.2 und 260.4 sind keine Abschnitte 215 mit Fluidsegmenten 220 vorgesehen.

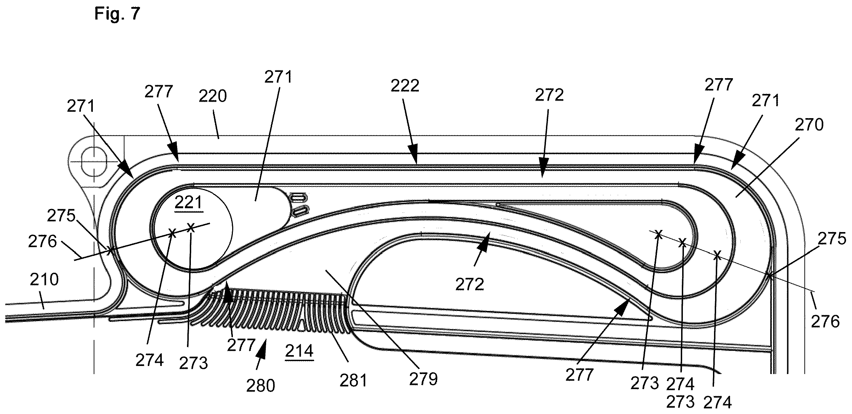

Jedes der Fluidsegmente 220 weist einen Fluidkanal 221 und einen Shuntkanal 222 (Fluidströmungsführung) auf, der jeweils zwischen dem Fluidkanal 221 und der Fluidführung 214 als Vertiefung ausgebildet ist. Der Shuntkanal 222 beschreibt eine langestreckte geschwungene Kurvenbahn 270 zur Führung der Fluidströmung. Der Verlauf von Kurvenbahn 270 und die Anordnung des Fluidkanals 221 wird später mit Bezug auf Fig. 7 nach detaillierter beschrieben.

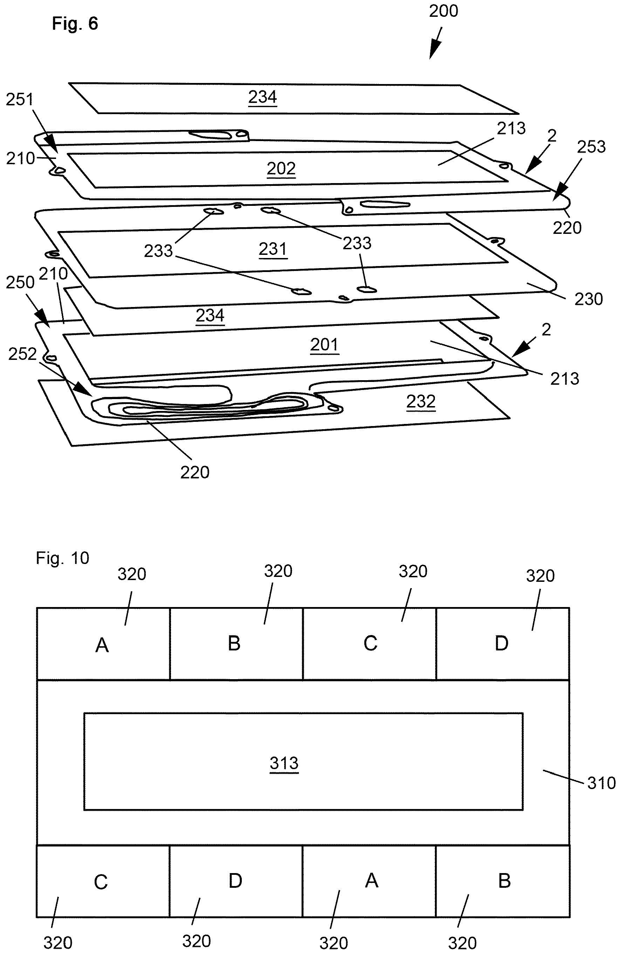

Auch wenn in den Fig. 5 und 6 nicht deutlich zu erkennen, bilden der Zellrahmen 210 und die Fluidsegmente 220 mit ihren Oberseiten 250 und 252 eine gemeinsame plane Oberflächenebene aus, die durch eine plane Gegenfläche abdichtbar ist und die obere Begrenzung des aktiven Zellraums 213, der Fluidführung 214 sowie des Shuntkanals 222 bildet. Die Fluidsegmente 220 sind doppelt so hoch wie der Zellrahmen 210, so dass die Unterseite 251 der Fluidsegment2 220 über die Unterseite 250 des Zellrahmens 210 vorsteht. Dies entspricht dem Aufbau der Verteilerplatte 1, auf deren Beschreibung ergänzend verwiesen wird.

In der Mitte der Querseiten des Zellrahmens 210 und an den Fluidsegmenten 220 an der Position, die in der Projektion etwa der Mitte der Längsseite des Zellrahmens entspricht, sind flanschartige Vorsprünge 261 jeweils mit einer runden Durchgangsöffnung 262 ausgebildet, mit der die Verteilerplatte 2 auf (nicht dargestellte) Stapelstangen aufsteckbar ist, um mehrere Verteilerplatten 2 beispielsweise zur Bildung einer Zellenanordnung oder mehrerer Zellenanordnungen übereinander zu stapeln.

Die Vorsprünge 261 an den Fluidsegmenten 220 ragen abschnittsweise über die Abschnittsbegrenzungsebene 259, die senkrecht zu der Oberseite 250 des Zellrahmens gerichtet durch die Quersymmetrieachse 258 verläuft, hinaus. Dieses Hinausragen ist begrenzt auf den Höhenbereich der Fluidsegmente 220, der auch im Höhenbereich des Zellrahmens 210 liegt. Außerdem erstreckt sich der Vorsprung 261 - ausgehend von der Oberseite 252 des Fluidsegments 220 - nur über die halbe Höhe des Zellrahmens 110. So können zwei Verteilerplatten 2 an ihren Unterseiten 251, 253 von Zellrahmen 210 und Fluidsegmenten 220 derart aneinandergefügt gestapelt werden, dass die Unterseiten 251 der Zellrahmen 210 direkt aneinander anliegen, ohne dass die flanschartigen Vorsprünge 261 der Fluidsegmente 220 (oder die Fluidsegmente 220 selbst) miteinander kollidieren. Hierdurch wird die Stapelbarkeit sichergestellt.

Fig. 6 zeigt den Aufbau einer Zellenanordnung 200 aus zwei Verteilerplatten 2 der zweiten Ausführungsform gemäß Fig. 5. Die Zellenanordnung 200 ist ein als Redox-Flow-Batterie ausgebildeter Energiespeicher mit einer ersten Fluidzelle 201 und einer zweiten Fluidzelle 202.

Zwischen die erste Verteilerplatte 2 mit nach oben weisender Oberfläche 250, 252 von Zellrahmen 210 und Fluidsegmenten 220 und die zweite Verteilerplatte 2 mit nach oben weisender Unterfläche 251, 253 von Zellrahmen 210 und Fluidsegmenten 220 ist eine Dichtung 230 mit einer in die Dichtung 230 integrierten Ionenaustauschmembran 231 zwischengelegt und derart abdichtend eingeklemmt ist, dass eine Vermischung von Fluid in der ersten Fluidzelle 201 der ersten der Verteilerplatten 2 und Fluid in der zweiten Fluidzelle 202 der zweiten der Verteilerplatten 2 verhindert ist. Auf der der Ionenaustauschmembran 231 gegenüberliegenden Seite des Zellrahmens 210 jeder der Verteilerplatten 2 ist eine Elektrodenplatte 232 derart abdichtend geordnet (wobei nur die untere Elektrodenplatte 232 dargestellt ist), dass der aktive Zellraum 213 jeder der Verteilerplatten 2 fluiddicht versschlossen ist, so dass über die Fluidsegmente 220 jeder der aktiven Zellräume 213 von dem Fluid durchströmbar ist.

Eine in den Figuren nicht dargestellte Klemm- bzw. Verbindungseinrichtung ist vorgesehen, die zum Ausüben eines Klemm- bzw. Verbindungsdrucks auf die aufeinander liegenden Zellrahmen 210 mit der Ionenaustauschmembran 231 respektive Dichtung 230 und den Elektrodenplatten ausgebildet ist. Die erfindungsgemäße Klemm- bzw. Verbindungseinrichtung kann bspw. Abschluss-Klemmplatten mit Anschlüssen zur Verbindung an das Fluidreservoir aufweisen und mittels dieser Klemmplatten die Elektrodenplatten 232 und Zellrahmen 210 mit der zwischenliegenden Dichtung 230 mit Ionenaustauschmembran 231 mit für die Dichtwirkung ausreichendem Anpressdruck zusammendrücken. Die Erfindung ist aber nicht auf diese Ausbildung einer Verbindungseinrichtung als Klemmeinrichtung beschränkt.

Die Dichtung 230 ist auf die Oberseite 250, 252 des Zellrahmens 210 und der Fluidsegmente 220 jeder der zwei Verteilerplatten 2 derart auflegbar, dass jeweils die Oberseiten 250, 252 der Zellrahmen 210 und der Fluidsegmente 220 jeder der zwei Verteilerplatten 2 einander zugewandt angeordnet sind. Durch die gemäß dieser Ausführungsform vorgesehenen Dichtung 230 mit integrierter Ionenaustauschmembran 231 werden also durch das Verklemmen der Dichtung 230 mit Ionenaustauschmembran 231 zwischen den Verteilerplatten 2 nicht nur die aktiven Zellräume 213 abgedichtet, sondern auch die (zur Oberseite 250, 252 offenen) Fluidführungen 214 in den Zellrahmen 210 und Shuntkanäle 222 in den Fluidsegmenten 220, wobei die Dichtung 230 Durchlässe 233 im Bereich der Fluidkanäle 221 aufweist, damit diese an ein Fluidreservoir anschließbar und von dem Fluid durchströmbar sind.

In jedem aktiven Zellraum 213 kann ein insbesondere leitfähiger Filz 234 aufgenommen sein, der die effektive Elektrodenfläche in dem aktiven Zellraum 213 vergrößert.

Eine solche Zellenanordnung aus zwei Verteilerplatten 2, die wie in Fig. 6 dargestellt miteinander verbunden sind, bildet eine Zelle des Energiespeichers mit einer ersten und einer zweiten Fluidzelle 201, 202, die über die Ionenaustauschmembran 231 elektrisch oder elektrochemisch miteinander reagieren können. Der Energiespeicher kann insbesondere als Redox-Flow-Batterie ausgebildet sein.

Es können Stapel aus mehreren solcher Zellenanordnungen gebildet werden, in denen mehrere Fluidzellen elektrisch in Serie geschaltet sind. Dazu sind mehrere Zellenanordnungen übereinander in einem Stapel angeordnet, wobei die Elektrodenplatten 232 zwischen zwei benachbarten Zellanordnungen als Bipolarplatten ausgebildet sind. Durch die Verwendung von Bipolarplatten werden mehrere Zellenanordnungen des Energiespeichers in Serie geschaltet, indem sie Elektroden unterschiedlicher elektrischer Polung für zwei benachbarte aktive Zellräume 213 bilden.

Insbesondere in einer solchen Stapelanordnung sind mehrere Fluidzellen des Energiespeichers, die sich auf einem unterschiedlichen Potential befinden, über die Fluidkanäle 213 durch das elektrisch leitfähige Fluid miteinander verbunden, was zu einem unerwünschten Stromfluss und einer Entladung des Energiespeichers führen kann. Dem kann durch eine erfindungsgemäße Fluidführungsströmung entgegengewirkt werden, die zum einen den Strömungsweg des Fluids von dem einen zum nächsten aktiven Zellraum 213 verlängert und damit einen möglichst hohen elektrischen Widerstand zwischen den Zellräumen 213 bildet (Shuntkanal, Shuntwiderstand). Die Fluidströmungsführung ist also als Shuntkanal 222 ausgebildet und wird mit demselben Bezugszeichen versehen.

Zum andern soll der hydraulische Widerstand zum Durchströmen möglichst gering sein. Um diese - einander grundsätzlich widersprechenden - Eigenschaften in optimierter Weise zu verbinden, schlägt die Erfindung entsprechend einem weiteren Aspekt der vorgesehenen Verteilerplatte 2 vor, dass der Shuntkanal 222 eine langestreckte geschwungene Kurvenbahn 270 beschreibt, wie sie mit Bezug auf Fig. 7 gemäß verschiedenen, auch einzeln miteinander kombinierbaren Aspekten ausführlicher beschrieben wird.

Der Shuntkanal 222 verläuft zwischen dem Fluidkanal 221 und einer der Fluidführungen 214 des Zellrahmens 210, wobei an den einander gegenüberliegenden Enden der Kurvenbahn 270 Kurvenumlenkungen 271 vorgesehen sind, in denen die Kurvenbahn 270 um mindestens 90°, vorzugsweise um mindestens 180°, im dargestellten Fall um mehr als 180° umgelenkt wird. Die zwei Kurvenumlenkungen 271 an den einander gegenüberliegenden Enden der Kurvenbahn 270 sind durch gerade oder geschwungene Kurvenführungen 272 verbunden, wobei der Strömungsquerschnitt der Kurvenbahn 270 im Bereich der Kurvenumlenkungen 271 größer ist als im Bereich der geraden oder geschwungenen Kurvenführungen 272.

Der Shuntkanal 222 ist also eine geeignete Fluidströmungsführung, und wird im Folgenden daher synonym auch als Fluidströmungsführung 222 bezeichnet. Der Begriff "Shuntkanal" rührt im Zusammenhang mit elektrischen Energiespeichern daher, dass das Fluid Ionen enthält und somit ein (häufig unerwünschter) elektrischer Strom durch das Fluid fließt und bspw. den elektrischen Energiespeicher entlädt. Weil der elektrische Widerstand mit der Länge des Strömungswegs zunimmt, was den elektrischen Strom reduziert, dient der Shuntkanal respektive die Fluidströmungsführung 222 dazu, entsprechend der Länge des Strömungswegs den elektrischen Widerstand zu erhöhen (Aspekt Shuntkanal) und das Strömungsverhalten des Fluids möglichst energiearm, d.h. mit möglichst geringem Druck, zu ermöglichen (Aspekt Fluidströmungsführung).

Vorzugsweise beträgt die Umlenkung in der geschwungenen Kurvenführung 272 weniger als 60°, besonders bevorzugt weniger als 50° und gemäß einer weiter bevorzugten Ausführungsform zwischen 30° und 50°. In geraden oder nur in diesem vorgenannten Umlenkungsbereich bis maximal 60° geschwungenen Kurvenbahnen treten nur wenige Verwirbelungen auf, so dass sich dort eine gleichmäßige (laminare) Strömung ausbildet. An den Kurvenumlenkungen 271 entstehen an der Außenkante im Bereich der Krümmung und an der Innenkante der Kurvenumlenkungen 271 Wirbelgebiete, die den effektiven Strömungsquerschnitt vermindern. Durch einen verminderten effektiven Strömungsquerschnitt werden die Strömungsgeschwindigkeit und der Druckverlust erhöht. Dem wird erfindungsgemäß durch die bauliche Vergrößerung des Strömungsquerschnitts im Bereich der Kurvenumlenkungen 271 entgegengewirkt.

Die Kurvenumlenkung 271 erfolgt vorzugsweise auf einer Kreisbahn, wobei die Innenkante und die Außenkante der Kurvenumlenkung 271 jeweils einen Teilkreisbogen mit festem Radius beschreiben und die Mittelpunkte 273, 274 der Teilkreisbögen der Innenkante und der Außenkante gegeneinander verschoben sind. Die Innenkante der Kurvenumlenkung 271 beschreibt immer den Rand der Kurvenumlenkung 271 mit dem kleineren Radius, und die Außenkante der Kurvenumlenkung 271 beschreibt immer den Rand der Kurvenumlenkung 271 mit dem größeren Radius. Anders ausgedrückt ist die Außenkante der Kurvenumlenkung 271 dem Ende der Kurvenbahn 270 näher als die Innenkante, wobei das Fluid zwischen der Außenkante und der Innenkante als Ränder der Kurvenbahn 270 strömt, entsprechend den Rändern eines Kanals.

Besonders vorteilhaft ist es, wenn der Mittelpunkt 274 des Teilkreisbogens der Außenkante gegenüber dem Mittelpunkt 273 des Teilkreisbogens der Innenkante in Richtung des äußeren Scheitelpunkts 275 der Kurvenumlenkung 271 verschoben ist. Der äußere Scheitelpunkt 275 der Kurvenumlenkung 271 liegt vorzugsweise etwa in der Mitte des Umfangs des Teilkreisbogens der Außenkante. Hierdurch lässt sich eine sanfte Kurvenumlenkung 271 mit vergleichbarem Strömungsverhalten an den beiden Enden 277 der Kurvenumlenkung 271 erreichen, an denen die Kurvenumlenkung 271 in die gerade oder geschwungenen Kurvenführung 272 übergeht. Dies ist erzeugt insgesamt ein verbessertes Strömungsverhalten der Fluidströmung. Typischer Weise liegen der Mittelpunkt 274 des Teilkreisbogens der Außenkante, der Mittelpunkt 275 des Teilkreisbogens der Innenkante und der äußere Scheitelpunkt auf einer gemeinsamen Geraden 276.

Optimaler Weise ist die Umlenkung des Fluidstroms in der Kurvenumlenkung 271 größer als 180°. Hierdurch lässt sich die Verbreiterung der Strömungsbahn in der Kurvenumlenkung 271 respektive die damit verbundene Vergrößerung des Strömungsquerschnitts ohne abrupte Kanten und erreichen. Vorzugweise liegt eine Umlenkung zwischen 180° und 220° und besonders bevorzugt zwischen 190° und 210°. Insofern stellt das dargestellte Ausführungsbeispiel eine besonders bevorzugte Ausführungsform dar, auf die die erfindungsgemäße Kurvenbahn 270 der Fluidströmungsführung 222 jedoch nicht beschränkt ist.

Außerdem lässt sich damit auch einfach einstellen, dass die Breite der Kurvenbahn 270 an den Enden 277 der Kurvenumlenkung 271 beim Übergang in die jeweils anschließenden Kurvenführungen 272 gleich sein kann, ohne dass es zu abrupten Kanten oder Übergängen in der Kurvenbahn 270 kommt. Dadurch kann entsprechend einer bevorzugten Ausführungsform erreicht werden, dass der als Breite definierte Abstand zwischen Innenkante und Außenkante der Kurvenbahn 270 im Bereich der Kurvenführung 272 gleich und konstant ist. Hierdurch wird eine gleichmäßige Strömung des Fluids in der Kurvenführung 272 ohne das Auftreten eines Fluidstaus befördert. In den Bereichen der Kurvenumlenkung 271, in denen es zu Verwirbelungen des Fluids kommt, verbreitert sich die Kurvenbahn 270 bis zu dem Scheitelpunkt 275 (ausgehend jeweils von den Enden 277 der Kurvenführung 272) entsprechend der vorbeschriebenen Ausbildung der Kurvenumlenkung 271 mit den durch die Innenkante und die Außenkante beschriebenen Teilkreisbögen, deren Mittelpunkte 273, 274 gegeneinander verschoben sind. Es hat sich herausgestellt, dass durch diese Konfiguration auf einfache Weise ein näherungsweise gleicher effektiver Strömungsquerschnitt für das Fluid entlang der Kurvenbahn 270 ergibt.

Für einen Stapelaufbau mehrerer Verteilerplatten 2 übereinander kann die Höhe der Kurvenbahn 270 (in Richtung des Verlaufs von Innenkante und Außenkante von Kurvenumlenkung 271 und von gerader oder geschwungener Kurvenführung 272 (optimaler Weise entlang der gesamten Kurvenbahn 270) gleich sein. Vorzugsweise entspricht die Höhe der Kurvenbahn 270 in etwa der Breite der Kurvenbahn 270 im Bereich der Kurvenführungen 272 mit der erwähnten laminaren Strömung. Dies fördert ein möglichst ungestörtes Strömungsverhalten des Fluids in der Kurvenbahn 270 des Shuntkanals bzw. der Fluidströmungsführung 222, also eine laminare Strömung.

Entsprechend der in Fig. 7 dargestellten, bevorzugten Ausführungsform ist Fluidkanal 221 im Bereich einer der Kurvenumlenkungen 271 angeordnet, wobei der Fluidkanal 221 von der von der Kurvenumlenkung 221 und den an die Kurvenumlenkung 271 anschließenden Kurvenführungen 272 umgeben ist. Hierdurch wird die zur Verfügung stehende Fläche, auf der die Kurvenbahn 270 angeordnet ist, optimal ausgenutzt, d.h. eine möglichst lange Strömungsführung bei optimierten hydraulischen Bedingungen erreicht. Vorzugsweise kann der Durchmesser des Fluidkanals in etwa dem Durchmesser der Innenkannte der Kurvenumlenkung 271 entsprechen, die den Fluidkanal 221 umgibt. Auch wenn diese Anordnung des Fluidkanals 221 besonders bevorzugt ist, sind die vorbeschriebenen Merkmale zur Ausgestaltung der Kurvenbahn 270 auch unabhängig hiervon realisierbar, wie sich dem Fachmann unmittelbar erschließt.

Entsprechend einer bevorzugten Möglichkeit der Führung der Kurvenbahn 270 kann, wie in Fig. 7 dargestellt, eine der Kurvenumlenkungen 271 einen Kurvenbahnabschnitt mehr aufweist als die andere der Kurvenumleitungen 271, d.h. das Fluid strömt einmal mehr durch die eine Kurvenumlenkung 271 als durch die andere Kurvenumlenkung 271. In dem dargestellten Beispiel ist der Fluidkanal 221 in der Kurvenumlenkung 271 vorgesehen, die einen Kurvenbahnabschnitt weniger aufweist, was einen größeren Fluidkanal 221 ermöglicht.

In einer Kurvenumlenkung 271 mit mehreren Kurvenbahnabschnitten sind diese nebeneinander angeordnet und bestimmen, wie oft das Fluid während des Strömens in der Kurvenbahn 270 durch die Kurvenumlenkung 271 strömt und dort umgelenkt wird. Da jeder Kurvenbahnabschnitt in einer Kurvenumlenkung 271 Platz (Grundfläche) benötigt, verbleibt in der Kurvenumlenkung 271 mit der kleineren Anzahl von Kurvenbahnabschnitten mehr Platz für den Fluidkanal 221, der entsprechend einen größeren Durchmesser aufweist, so dass einen größere Fluidmenge pro Zeiteinheit (bei gleicher Strömungsgeschwindigkeit) zugeführt werden kann.

Zwischen dem Fluidkanal 221 und der Kurvenführung 272 ist ein erster Trichterbereich 278 vorgesehen ist, dessen Breite sich von einer Breite des Fluidkanals 221 (d.h. etwas dessen Durchmesser) auf eine Breite der (in dem hier gezeigten Beispiel gerade, ggf. aber auch geschwungenen) Kurvenführung 272 reduziert.

Die Kurvenbahn 270 an dem Fluidkanal 221 entgegengesetzten Ende kann einen zweiten Trichterbereich 279 aufweisen, mit dem sich die Kurvenführung 272 in eine Öffnung 280 mit größerer Breite weitet.

Es sind, abweichend von der besonders bevorzugten und in Fig. 7 dargestellten Ausführungsform auch erfindungsgemäße Fluidströmungsführungen möglich, die nur einen der erster oder zweiten Trichterbereiche 278, 279 aufweisen.

In der Öffnung 280 des zweiten Trichterbereichs 279 kann ein Diffusor 281 zur Verteilung des Fluids und zur Abstützung vorgesehen sein. Dies führt an der Öffnung 280 - je nach Strömungsrichtung dem Einlass oder Auslass des Fluids - zu einer wenig dynamischen Situation, die gut kontrollierbar ist.

Fig. 8 zeigt - sehr schematisch - den Aufbau einer weiteren Verteilerplatte 3 mit einem Zellrahmen 310, dessen Innenrand 311 einen aktiven Zellraum 313 umgibt. An bestimmten Abschnitten 315 des Außenrands 312 des Zellrahmens sind Fluidsegmente 320 vorgesehen, wobei ein Fluid über eines der Fluidsegmente 320 in den aktiven Zellraum 313 einströmen und über das andere der Fluidsegmente 320 ausströmen kann, an anderen Abschnitten 315 sind keine Fluidsegmente vorgesehen. Die Fluidsegmente 320 weisen die vierfache Höhe des Zellrahmens 310 auf, wobei die Fluidsegmente 320 auf der in Fig. 8 obenliegend dargestellten Unterseite der Verteilerplatte 3 mit ihrer Unterseite 353 über die Unterseite 351 des Zellrahmens 310 hinausragen. Die in Fig. 8 nicht dargestellten Oberseiten von Zellrahmen 310 und Fluidsegmenten 320 bilden dagegen, wie auch in anderen beschriebenen bevorzugten Ausführungsformen, eine Ebene aus.

Die Abschnitte 315 des Zellrahmens 310, an denen die Fluidführungen 314 angeordnet sind, lassen sich durch jeweils eine 180° Drehung um die Längssymmetrieachse 357 und die Quersymmetrieachse 358 in benachbarte Abschnitte 315 derselben Verteilerplattenreiche 360.1 und 360.3 überführen. In jedem der durch die beiden Symmetrieachsen 357, 358 abgegrenzten Verteilerplattenbereiche 360.1 bis 360.4 sind zwei Abschnitte 315, an denen Raum zum Anordnen von Fluidsegmenten 320 besteht, der beim Stapeln mehrerer Verteilerplatten 3 (respektive Zellenanordnungen aus je zwei Verteilerplatten) ausgenutzt werden kann. In diesem Sinne kann "benachbart" von "unmittelbar benachbart" verstanden werden, d.h. die beiden Abschnitte in einem der Verteilerplattenbereiche 360 liegen nebeneinander, ohne sich zu überschneiden und ohne dass ein weiterer Abschnitt 315 dazwischen angeordnet ist. Bei nur zwei Abschnitten 315 in einem Verteilerplattenbereich 360.X ist dies zwangsläufig der Fall. Wenn mehr als zwei Abschnitte in einem Verteilerplattenbereich 360 angeordnet sind, kann benachbart auch bedeuteten, dass diese Abschnitte 315 in nicht überschneidender Weise angeordnet sind, wobei andere Abschnitte 315 zwischen diesen ineinander überführten Abschnitten 315 liegen. In diesem Fall können weitere Verteilerplatten vorgesehen sein, die solche Abschnitte zur Anordnung der Fluidsegmente verwenden.

Im Übrigen kann auch die Verteilerplatte 3 (sowie daraus gebildete Zellenanordnungen und Stapel) einige oder alle zuvor im Zusammenhang mit den anderen Ausführungsformen diskutierten Merkmale mit den jeweiligen Vorteilen aufweisen. Dem Fachmann ist bewusst, dass die in den verschiedenen Ausführungsformen diskutierten Merkmale mit den damit verbundenen Vorteilen entsprechend auch jeder der anderen Ausführungsformen umgesetzt werden können.

Fig. 9 zeigt einen Stapel aus insgesamt acht Verteilerplatten 3, wobei Zellrahmen und aktiver Zellraum in Fig. 9 nicht dargestellt sind. Es ist ersichtlich, dass durch eine geeignete Anordnung der Verteilerplatten 3 Stapel aus jeweils vier Verteilerplatten 3 gebildet werden können, bei denen die Zellrahmen jeweils plan aufeinander liegen und die Fluidsegmente 320 trotz vierfacher Höhe im Vergleich zu dem Zellrahmen benachbart zueinander angeordnet sind.

Die Anordnung der Verteilerplatten 3 wird nachfolgend anhand von vier verschiedenen Ausrichtungen A bis D beschrieben, die in den Fig. 9 und 10 im Bereich der Fluidsegmente eingetragen sind.

Die Ausrichtung A der Verteilerpatte 3 entspricht der Verteilerplatte in der in Fig. 8 gezeigten Ausrichtung. Die Ausrichtung B ergibt sich durch Drehung der Verteilerplatte 3 mit der Ausrichtung A um jede der Symmetrieachsen 357, 358 um jeweils 180°. Durch Zwischenlegen einer geeigneten Ionenaustauschmembran mit ggf. weiteren Dichtungselemente und Anordnen geeigneter Elektroden oder Bipolarplatten auf anderen Seiten der Verteilerplatten kann eine Zellenanordnung mit einer ersten und einer zweiten Fluidzelle eines Energiespeichers gebildet werden.

Durch Drehung der Verteilerplatte 3 in der Ausrichtung A bzw. B um nur eine der Symmetrieachsen 357, 358 ergeben sich die Ausrichtungen C bzw. D der Verteilerpatte 3, die entsprechend eine Zellenanordnung eines Energiespeichers bilden können. In diesen Ausrichtungen A, B respektive C, D sind die Zellenanordnungen auch jeweils mit plan aufliegenden Zellrahmen kombinierbar, selbst wenn die Fluidsegmente 320 jeweils die vierfache Höhe der Zellrahmen 310 aufweisen.

Dank der hier gezeigten dritten Ausführungsform, bei der die Abschnitte des Außenrands 315 des Zellrahmens 310, an denen die zwei Fluidsegmente 320 angeordnet sind, lassen sich durch jeweils eine 180°-Drehung um jede der Symmetrieachsen 358, 359 in benachbarte Abschnitte 315 derselben Verteilerplattenbereiche 360.1, 360.3 überführen. Dies ist sogar mit einer einzigen Verteilerplatte 3 möglich.

Bei noch mehr Abschnitten 315 in jedem der Verteilerplattenbereiche 360.X ist mindestens noch eine weitere (unterschiedliche) Verteilerplatte mit entsprechend geeigneter Anordnung der Fluidsegmente vorzusehen. Dies ermöglicht - bezogen auf die Höhe des Zellrahmes 310 - noch höhere Fluidsegmente 320 mit verbessertem Strömungsverhalten.

Durch Verwendung der erfindungsgemäßen Verteilerplatten 1, 2, 3 wird sichergestellt, dass mehrere Zellanordnungen übereinandergestapelt werden können bzw. stapelbar sind, obwohl jede der Verteilerplatten ein höheres Fluidsegment aufweist, als es der Höhe der Zellrahmen entspricht. Die Verteilerplatten sind, wie beschrieben, erfindungsgemäß so ausgestaltet, dass die Zellrahmen von Zellanordnungen so stapelbar sind, dass die höheren Fluidsegmente der Verteilerplatten kollisionsfrei anordenbar sind.

Besonders vorteilhaft ist es in diesem Zusammenhang, wenn nur ein Aufbau einer Verteilerplatte existiert, die derart ausgestaltet sind, dass sich Zellanordnungen bilden, die durch Rotation von 180° um eine der beschrieben Rotationachsen ineinander überführen lassen, wie dies mit Bezug auf die Verteilerplatten 1 und 2 beschrieben ist. Dies führt zu einer Zellenanordnung mit gleichen elektrischen Eigenschaften, die - bezogen auf den mechanischen Aufbau - grundsätzlich zu Stapeln beliebiger Höhe zusammenfügbar sind und optimierte elektrische (hoher Shuntwiderstand) und strömungstechnische (niedriger Strömungswiderstand) Eigenschaften aufweisen.

### Bezugszeichen:

- 1: Verteilerplatte gemäß einer ersten Ausführungsform
- 2: Verteilerplatte gemäß einer zweiten Ausführungsform
- 3: Verteilerplatte gemäß einer dritten Ausführungsform

- 110: Zellrahmen
- 111: Innenrand des Zellrahmens
- 112: Außenrand des Zellrahmens
- 113: aktiver Zellraum
- 114: Fluidführung
- 115: Abschnitt des Außenrands des Zellrahmens
- 116: Höhe des Zellrahmens
- 120: Fluidsegment
- 121: Fluidkanal
- 122: als Shuntkanal ausgebildete Fluidströmungsführung
- 126: Höhe des Fluidsegments
- 150: Oberseite des Zellrahmens
- 151: Unterseite des Zellrahmens
- 152: Oberseite des Fluidsegments
- 153: Unterseite des Fluidsegments
- 157: Längssymmetrieachse
- 158: Quersymmetrieachse
- 159: Abschnittsbegrenzungsebene
- 160.1 bis 160.4: Verteilerplattenbereiche

- 200: Zellenanordnung aus zwei Verteilerplatten
- 201: erste Fluidzelle der Zellenanordnung (des Energiespeichers)
- 202: zweite Fluidzelle der Zellenanordnung (des Energiespeichers)
- 210: Zellrahmen
- 211: Innenrand des Zellrahmens
- 212: Außenrand des Zellrahmens
- 213: aktiver Zellraum
- 214: Fluidführung
- 215: Abschnitt des Außenrands des Zellrahmens
- 220: Fluidsegment
- 221: Fluidkanal
- 222: als Shuntkanal ausgebildete Fluidströmungsführung
- 230: Dichtung
- 231: Ionenaustauschmembran
- 232: Elektrodenplatte
- 233: Durchlass für Fluidkanal
- 234: Filz
- 250: Oberseite des Zellrahmens
- 251: Unterseite des Zellrahmens
- 252: Oberseite des Fluidsegments
- 253: Unterseite des Fluidsegments
- 257: Längssymmetrieachse
- 258: Quersymmetrieachse
- 259: Abschnittsbegrenzungsebene
- 260.1 bis 260.4: Verteilerplattenbereiche
- 261: flanschartiger Vorsprung
- 262: runde Durchgangsöffnung
- 270: als langestreckte geschwungene Kurvenbahn ausgebildete Fluidströmungsführung im Sinne eines Shuntkanals
- 271: Kurvenumlenkung
- 272: gerade oder geschwungene Kurvenführung
- 273: Mittelpunkt des Teilkreisbogens der Innenkante der Kurvenumlenkung
- 274: Mittelpunkt des Teilkreisbogens der Außenkante der Kurvenumlenkung
- 275: äußerer Scheitelpunkt des Teilkreisbogens der Kurvenumlenkung
- 276: durch die Mittelpunkte der Teilkreisbögen und den äußeren Scheitelpunkt definierte Gerade
- 277: Enden der Kurvenbahn
- 278: erster Trichterbereich
- 279: zweiter Trichterbereich
- 280: Öffnung
- 281: Diffusor

- 310: Zellrahmen
- 311: Innenrand des Zellrahmens
- 312: Außenrand des Zellrahmens
- 313: aktiver Zellraum
- 315: Abschnitt des Außenrands des Zellrahmens
- 320: Fluidsegment
- 351: Unterseite des Zellrahmens
- 353: Unterseite des Fluidsegments
- 360.1 bis 360.4: Verteilerplattenbereiche
- 357: Längssymmetrieachse
- 358: Quersymmetrieachse

## Patentansprüche

1. Verteilerplatte für ein Fluid zum Ausbilden einer Fluidzelle eines mindestens eine erste und eine zweite Fluidzelle (201, 202) aufweisenden Energiespeichers zum Speichern elektrischer Energie, wobei zwischen jeder ersten und zweiten Fluidzelle (201, 202) des Energiespeichers eine Ionenaustauchmembran (231) angeordnet ist, die eine Vermischung der Fluide in der ersten und der zweiten Fluidzelle (201, 202) verhindert,
wobei die Verteilerplatte (1, 2, 3) aufweist
• einen Zellrahmen (110, 210, 310), dessen Innenrand (111, 211, 311) einen aktiven Zellraum (113, 213, 313) umschließt und in dem zwei Fluidführungen (114, 214) ausgebildet sind, von denen eine für das Einleiten des Fluids in den aktiven Zelleraum (113, 213, 313) und die andere für das Ausleiten des Fluids aus dem aktiven Zellraum (113, 213, 313) vorgesehen sind, und
• zwei Fluidsegmente (120, 220, 320) mit jeweils einem als Durchgangsöffnung durch die Verteilerplatte (1, 2, 3) ausgebildeten Fluidkanal (121, 221) zum Anschluss an ein Fluidreservoir und jeweils einem Shuntkanal (122, 222), der zwischen dem Fluidkanal (121, 221) und jeweils einer der beiden Fluidführungen (114, 214) ausgebildet ist,
**dadurch gekennzeichnet, dass**
die Fluidsegmente (120, 220, 320) jeweils von einem Abschnitt (115, 215, 315) des Außenrands (112, 212, 312) des Zellrahmens (110, 210, 310) nach außen vorstehend angeordnet sind, wobei die Höhe (126) der Fluidsegmente (120, 220, 320) größer ist als die Höhe (116) des Zellrahmens (110, 210, 310).

2. Verteilerplatte nach Anspruch 1, **dadurch gekennzeichnet, dass** die Fluidführungen (114, 214) in dem Zellrahmen (110, 210, 310) an der Oberseite (150, 250) des Zellrahmens (110, 210, 310) und der Shuntkanal (122, 222) an der Oberseite (152, 252) jedes der Fluidsegmente (120, 220, 320) ausgebildet sind, wobei die oberen Ränder der Fluidführungen (114, 214) und die oberen Ränder der Shuntkanäle (122, 222) eine gemeinsame Oberflächenebene von Zellrahmen (110, 210, 310) und Fluidsegmenten (120, 220, 320) bilden.

3. Verteilerplatte nach Anspruch 1 oder 2, **dadurch gekennzeichnet, dass** die Unterseite (153, 253, 353) der Fluidsegmente (120, 220, 320) über die Unterseite (151, 251, 351) des Zellrahmens (110, 210, 310) hinaussteht, wobei der über die Unterseite (151, 251, 351) des Zellrahmens (110, 210, 310) hinausstehende Teil der Fluidsegmente (120, 220, 320) keine senkrecht auf der Unterseite (151, 251, 351) des Zellrahmens (110, 210, 310) stehende und senkrecht zu dem Außenrand (112, 212, 312) des Zellrahmens (110, 210, 310) ausgerichtete Abschnittsbegrenzungsebene (159) der Abschnitte (115, 215, 315) schneidet, in denen die Fluidsegmente (120, 220, 320) angeordnet sind.

4. Verteilerplatte nach Anspruch einen der vorhergehenden Ansprüche, **dadurch gekennzeichnet, dass** durch senkrecht aufeinander stehende Symmetrieachsen (157, 158, 257, 258, 357, 358) des aktiven Zellraums (113, 213, 313) vier Verteilerplattenbereiche (160.1 bis 160.4, 260.1 bis 260.4, 360.1 bis 360.4) gebildet sind und die Abschnitte (115, 215, 315) des Außenrands (112, 212, 312) des Zellrahmens (110, 210, 310), an denen die zwei Fluidsegmente (120, 220, 320) angeordnet sind, in verschiedenen Verteilerplattenbereichen (160.1 bis 160.4, 260.1 bis 260.4, 360.1 bis 360.4) liegen derart, dass die Abschnitte (115, 215, 315) des Außenrands (112, 212, 312) des Zellrahmens (110, 210, 310), an denen die zwei Fluidsegmente (120, 220, 320) angeordnet sind, sich durch jeweils eine 180°-Drehung um jede der Symmetrieachsen (157, 158, 257, 258, 357, 358) ineinander oder in benachbarte Abschnitte (115, 215, 315) derselben Verteilerplattenbereiche (160.1 bis 160.4, 260.1 bis 260.4, 360.1 bis 360.4) überführen lassen.

5. Verteilerplatte nach Anspruch 4, **dadurch gekennzeichnet, dass** die Höhe (126) der Fluidsegmente (120, 220, 320) maximal der Höhe (116) der Zellrahmen (110, 210, 310) multipliziert mit dem zweifachen der Anzahl der nicht überlappenden Abschnitte (115, 215, 315) am Außenrand (112, 212, 312) des Zellrahmens (110, 210, 310) jedes der Verteilerplattenbereiche (160.1 bis 160.4, 260.1 bis 260.4, 360.1 bis 360.4) entspricht, an denen ein Fluidsegment (120, 220, 320) anordenbar ist.

6. Verteilerplatte nach einem der vorhergehenden Ansprüche, **dadurch gekennzeichnet, dass** der Zellrahmen (110, 210, 310) rechteckig mit verschieden langen Rahmenseiten ausgebildet ist, die Fluidführungen (114, 214) in den als Rahmenlängsseiten bezeichneten längeren Rahmenseiten ausgebildet sind und die Abschnitte (115, 215, 315) des Außenrands (112, 212, 312) des Zellrahmens (110, 210, 310), an denen die Fluidsegmente (120, 220, 320) nach außen vorstehend ausgebildet sind, auch an den Rahmenlängsseiten angeordnet sind.

7. Verteilerplatte nach einem der Ansprüche 4 oder 5 und 6, **dadurch gekennzeichnet, dass** an jeder Rahmenlängsseite in genau einem der Verteilerplattenbereiche (160.1 bis 160.4, 260.1 bis 260.4, 360.1 bis 360.4) des Zellrahmens (110, 210, 310) genau ein Abschnitt (115, 215, 315) oder genau zwei Abschnitte (115, 215, 315) zum Anordnen eines Fluidsegments (120, 220, 320) vorgesehen sind.

8. Verteilerplatte nach einem der vorhergehenden Ansprüche, **dadurch gekennzeichnet, dass** der Shuntkanal (122, 222) eine langestreckte geschwungene Kurvenbahn (270) beschreibt, die zwischen einem der Fluidkanäle (121, 221) und einer der Fluidführungen (114, 214) des Zellrahmens (110, 210, 310) verläuft, wobei an einander gegenüberliegenden Enden der Kurvenbahn (270) Kurvenumlenkungen (271) vorgesehen sind, in denen die Kurvenbahn (270) um mindestens 90° Grad umgelenkt wird und zwei Kurvenumlenkungen (271) an einander gegenüberliegenden Enden der Kurvenbahn (270) durch gerade oder geschwungene Kurvenführungen (272) verbunden sind, wobei der Strömungsquerschnitt der Kurvenbahn (270) im Bereich der Kurvenumlenkungen (271) größer ist als im Bereich der geraden oder geschwungenen Kurvenführungen (272).

9. Zellenanordnung aus zwei Verteilerplatten nach einem der Ansprüche 1 bis 8, **dadurch gekennzeichnet, dass** zwischen den Zellrahmen (110, 210, 310) von zwei Verteilerplatten (1, 2, 3) eine Ionenaustauschmembran (231) derart abdichtend eingeklemmt ist, dass eine Vermischung von Fluid in der Fluidzelle der ersten der Verteilerplatten (1, 2, 3) und Fluid in der Fluidzelle in der zweiten der Verteilerplatten (1, 2, 3) verhindert ist, und dass auf der der Ionenaustauschmembran (231) gegenüberliegenden Seite des Zellrahmens (110, 210, 310) jeder der Verteilerplatten (1, 2, 3) eine Elektrodenplatte (232) derart abdichtend geordnet ist, dass der aktive Zellraum (113, 213, 313) jeder der Verteilerplatten (1, 2, 3) fluiddicht verschlossen ist, so dass über die Fluidsegmente (120, 220, 320) jeder der aktiven Zellräume (113, 213, 313) von dem Fluid durchströmbar ist, wobei eine Verbindungseinrichtung vorgesehen ist, die zum Ausüben eines Verbindungsdrucks auf die aufeinander liegenden Zellrahmen (110, 210, 310) mit der Ionenaustauschmembran (231) und den Elektrodenplatten (232) ausgebildet ist.

10. Zellenanordnung nach Anspruch 9 mit Verteilerplatten (1, 2, 3) nach einem der Ansprüche 2 bis 8, **dadurch gekennzeichnet, dass** die Ionenaustauschmembran (231) in eine Dichtung (230) integriert ist, die auf die Oberseite (150, 152, 250, 252) des Zellrahmens (110, 210, 310) und der Fluidsegmente (120, 220, 320) jeder der zwei Verteilerplatten (1, 2, 3) auflegbar ist, wobei jeweils die Oberseiten (150, 152, 250, 252) der Zellrahmen (110, 210, 310) und der Fluidsegmente (120, 220, 320) jeder der zwei Verteilerplatten (1, 2, 3) einander zugewandt angeordnet sind.

11. Stapel aus mehreren Zellenanordnungen nach Anspruch 9 oder 10 mit Verteilerplatten (1, 2, 3) nach einem der Ansprüche 4 bis 8, **dadurch gekennzeichnet, dass** mehrere Zellenanordnungen übereinander in einem Stapel angeordnet sind, wobei die Elektrodenplatten (232) zwischen zwei benachbarten Zellanordnungen als Bipolarplatten ausgebildet sind.

## Claims

1. A distributor plate for a fluid for forming a fluid cell of an energy storage device having at least a first and a second fluid cell (201, 202) for storing electrical energy, wherein an ion-exchange membrane (231) is arranged between each first and second fluid cell (201, 202) of the energy storage device and prevents mixing of the fluids in the first and the second fluid cell (201, 202),
wherein the distributor plate (1, 2, 3) comprises
• a cell frame (110, 210, 310), the inner edge (111, 211, 311) of which encloses an active cell space (113, 213, 313) and in which two fluid guides (114, 214) are formed, one of which is provided for introducing the fluid into the active cell space (113, 213, 313) and the other for discharging the fluid from the active cell space (113, 213, 313), and
• two fluid segments (120, 220, 320), each having a fluid channel (121, 221) formed as a through-opening through the distributor plate (1, 2, 3) for connection to a fluid reservoir and each having a shunt channel (122, 222) formed between the fluid channel (121, 221) and a respective one of the two fluid guides (114, 214),
**characterised in that**
the fluid segments (120, 220, 320) are each arranged so as to project outwards from a section (115, 215, 315) of the outer edge (112, 212, 312) of the cell frame (110, 210, 310), wherein the height (126) of the fluid segments (120, 220, 320) is greater than the height (116) of the cell frame (110, 210, 310).

2. The distributor plate according to claim 1, **characterised in that** the fluid guides (114, 214) are formed in the cell frame (110, 210, 310) on the upper side (150, 250) of the cell frame (110, 210, 310), and the shunt channel (122, 222) is formed on the upper side (152, 252) of each of the fluid segments (120, 220, 320), wherein the upper edges of the fluid guides (114, 214) and the upper edges of the shunt channels (122, 222) form a common surface plane of the cell frame (110, 210, 310) and the fluid segments (120, 220, 320).

3. The distributor plate according to claim 1 or 2, **characterised in that** the lower side (153, 253, 353) of the fluid segments (120, 220, 320) projects beyond the lower side (151, 251, 351) of the cell frame (110, 210, 310), wherein the part of the fluid segments (120, 220, 320) projecting beyond the lower side (151, 251, 351) of the cell frame (110, 210, 310) does not intersect any section boundary plane (159) of the sections (115, 215, 315), said plane being perpendicular to the lower side (151, 251, 351) of the cell frame (110, 210, 310) and oriented perpendicular to the outer edge (112, 212, 312) of the cell frame (110, 210, 310), in which sections the fluid segments (120, 220, 320) are arranged.

4. The distributor plate according to any one of the preceding claims, **characterised in that** four distributor plate regions (160.1 to 160.4, 260.1 to 260.4, 360.1 to 360.4) are formed by mutually perpendicular axes of symmetry (157, 158, 257, 258, 357, 358) of the active cell space (113, 213, 313), and the sections (115, 215, 315) of the outer edge (112, 212, 312) of the cell frame (110, 210, 310) on which the two fluid segments (120, 220, 320) are arranged lie in different distributor plate regions (160.1 to 160.4, 260.1 to 260.4, 360.1 to 360.4), such that the sections (115, 215, 315) of the outer edge (112, 212, 312) of the cell frame (110, 210, 310) on which the two fluid segments (120, 220, 320) are arranged can be mapped onto one another, or onto adjacent sections (115, 215, 315) of the same distributor plate regions (160.1 to 160.4, 260.1 to 260.4, 360.1 to 360.4), by a respective 180° rotation about each of the axes of symmetry (157, 158, 257, 258, 357, 358).

5. The distributor plate according to claim 4, **characterised in that** the height (126) of the fluid segments (120, 220, 320) is at most equal to the height (116) of the cell frames (110, 210, 310) multiplied by twice the number of non-overlapping sections (115, 215, 315) on the outer edge (112, 212, 312) of the cell frame (110, 210, 310) of each of the distributor plate regions (160.1 to 160.4, 260.1 to 260.4, 360.1 to 360.4) at which a fluid segment (120, 220, 320) can be arranged.

6. The distributor plate according to any one of the preceding claims, **characterised in that** the cell frame (110, 210, 310) is rectangular and has frame sides of different lengths, the fluid guides (114, 214) are formed in the longer frame sides, referred to as longitudinal frame sides, and the sections (115, 215, 315) of the outer edge (112, 212, 312) of the cell frame (110, 210, 310) at which the fluid segments (120, 220, 320) are formed so as to project outwards are also arranged on the longitudinal frame sides.

7. The distributor plate according to any one of claims 4 or 5 and 6, **characterised in that** exactly one section (115, 215, 315) or exactly two sections (115, 215, 315) for arranging a fluid segment (120, 220, 320) are provided on each longitudinal frame side in exactly one of the distributor plate regions (160.1 to 160.4, 260.1 to 260.4, 360.1 to 360.4) of the cell frame (110, 210, 310).

8. The distributor plate according to any one of the preceding claims, **characterised in that** the shunt channel (122, 222) follows an elongated curved path (270) extending between one of the fluid channels (121, 221) and one of the fluid guides (114, 214) of the cell frame (110, 210, 310), wherein curve deflections (271) are provided at opposite ends of the curved path (270), in which the curved path (270) is deflected through at least 90°, and two curve deflections (271) at opposite ends of the curved path (270) are connected by straight or curved guide sections (272), wherein the flow cross-section of the curved path (270) in the region of the curve deflections (271) is larger than in the region of the straight or curved guide sections (272).

9. The cell assembly comprising two distributor plates according to any one of claims 1 to 8, **characterised in that** an ion-exchange membrane (231) is clamped in a sealing manner between the cell frames (110, 210, 310) of two distributor plates (1, 2, 3) such that mixing of fluid in the fluid cell of the first of the distributor plates (1, 2, 3) and fluid in the fluid cell of the second of the distributor plates (1, 2, 3) is prevented, and **in that**, on the side of the cell frame (110, 210, 310) of each of the distributor plates (1, 2, 3) opposite the ion-exchange membrane (231), an electrode plate (232) is arranged in a sealing manner such that the active cell space (113, 213, 313) of each of the distributor plates (1, 2, 3) is sealed fluid-tight, so that fluid can flow through each of the active cell spaces (113, 213, 313) via the fluid segments (120, 220, 320), wherein a connecting device is provided which is configured to exert a connecting pressure on the superposed cell frames (110, 210, 310) with the ion-exchange membrane (231) and the electrode plates (232).

10. The cell assembly according to claim 9 with distributor plates (1, 2, 3) according to any one of claims 2 to 8, **characterised in that** the ion-exchange membrane (231) is integrated into a seal (230), which can be placed on the upper side (150, 152, 250, 252) of the cell frame (110, 210, 310) and the fluid segments (120, 220, 320) of each of the two distributor plates (1, 2, 3), wherein the respective upper sides (150, 152, 250, 252) of the cell frames (110, 210, 310) and the fluid segments (120, 220, 320) of each of the two distributor plates (1, 2, 3) are arranged facing one another.

11. The stack comprising a plurality of cell assemblies according to claim 9 or 10 with distributor plates (1, 2, 3) according to any one of claims 4 to 8, **characterised in that** a plurality of cell assemblies are arranged one above another in a stack, wherein the electrode plates (232) between two adjacent cell assemblies are configured as bipolar plates.

## Revendications

1. Plaque de distribution pour fluide destinée à former une cellule de fluide d'un dispositif de stockage d'énergie comprenant au moins une première et une deuxième cellules de fluide (201, 202) destinées à stocker de l'énergie électrique, dans laquelle une membrane échangeuse d'ions (231) est disposée entre chaque première et deuxième cellules de fluide (201, 202) du dispositif de stockage d'énergie et empêche le mélange des fluides dans la première et la deuxième cellule de fluide (201, 202),
dans laquelle la plaque de distribution (1, 2, 3) comprend
• un cadre de cellule (110, 210, 310) dont le bord intérieur (111, 211, 311) renferme un espace de cellule actif (113, 213, 313) et dans lequel sont formés deux guides de fluide (114, 214), l'un étant prévu pour l'introduction du fluide dans l'espace de cellule actif (113, 213, 313) et l'autre pour l'évacuation du fluide de l'espace de cellule actif (113, 213, 313), et
• deux segments de fluide (120, 220, 320), chacun avec un canal de fluide (121, 221) formé comme une ouverture traversante à travers la plaque de distribution (1, 2, 3) pour la connexion à un réservoir de fluide et chacun avec un canal de dérivation (122, 222) formé entre le canal de fluide (121, 221) et chaque fois l'un des deux guides de fluide (114, 214),
**caractérisée en ce que**
les segments de fluide (120, 220, 320) sont chacun disposés en saillie à partir d'une section (115, 215, 315) du bord extérieur (112, 212, 312) du cadre de cellule (110, 210, 310), dans laquelle la hauteur (126) des segments de fluide (120, 220, 320) est supérieure à la hauteur (116) du cadre de cellule (110, 210, 310).

2. Plaque de distribution selon la revendication 1, **caractérisée en ce que** les guides de fluide (114, 214) sont formés dans le cadre de cellule (110, 210, 310) sur le côté supérieur (150, 250) du cadre de cellule (110, 210, 310) et le canal de dérivation (122, 222) est formé sur le côté supérieur (152, 252) de chacun des segments de fluide (120, 220, 320), dans laquelle les bords supérieurs des guides de fluide (114, 214) et les bords supérieurs des canaux de dérivation (122, 222) forment un plan de surface commun du cadre de cellule (110, 210, 310) et des segments de fluide (120, 220, 320).

3. Plaque de distribution selon la revendication 1 ou 2, **caractérisée en ce que** le côté inférieur (153, 253, 353) des segments de fluide (120, 220, 320) fait saillie au-delà du côté inférieur (151, 251, 351) du cadre de cellule (110, 210, 310), dans laquelle la partie des segments de fluide (120, 220, 320) faisant saillie au-delà du côté inférieur (151, 251, 351) du cadre de cellule (110, 210, 310) ne croise aucun plan limite de section (159) des sections (115, 215, 315), ce plan est perpendiculaire au côté inférieur (151, 251, 351) du cadre de cellule (110, 210, 310) et orienté de manière perpendiculaire au bord extérieur (112, 212, 312) du cadre de cellule (110, 210, 310), dans lesquelles sont disposés les segments de fluide (120, 220, 320).

4. Plaque de distribution selon l'une des revendications précédentes, **caractérisée en ce que** quatre zones de plaque de distribution (160.1 à 160.4, 260.1 à 260.4, 360.1 à 360.4) sont formées par des axes de symétrie mutuellement perpendiculaires (157, 158, 257, 258, 357, 358) de l'espace de cellule actif (113, 213, 313) et les sections (115, 215, 315) du bord extérieur (112, 212, 312) du cadre de cellule (110, 210, 310) sur lesquelles sont disposés les deux segments de fluides (120, 220, 320) se trouvent dans différentes zones de plaque de distribution (160.1 à 160.4, 260.1 à 260.4, 360.1 à 360.4), de telle sorte que les sections (115, 215, 315) du bord extérieur (112, 212, 312) du cadre de cellule (110, 210, 310) sur lesquelles les deux segments de fluide (120, 220, 320) sont disposés, peuvent être transformées l'une en l'autre ou en sections adjacentes (115, 215, 315) des mêmes zones de plaque de distribution (160.1 à 160.4, 260.1 à 260.4, 360.1 à 360.4), par une rotation respective de 180° autour de chacun des axes de symétrie (157, 158, 257, 258, 357, 358).

5. Plaque de distribution selon la revendication 4, **caractérisée en ce que** la hauteur (126) des segments de fluide (120, 220, 320) correspond au plus à la hauteur (116) des cadres de cellule (110, 210, 310) multipliée par deux fois le nombre de sections (115, 215, 315) non superposées au bord extérieur (112, 212, 312) du cadre de cellule (110, 210, 310) de chacune des zones de plaque de distribution (160.1 à 160.4, 260.1 à 260.4, 360.1 à 360.4) sur lesquelles un segment de fluide (120, 220, 320) peut être disposé.

6. Plaque de distribution selon l'une des revendications précédentes, **caractérisée en ce que** le cadre de cellule (110, 210, 310) est rectangulaire et présente des côtés de cadre de longueurs différentes, les guides de fluide (114, 214) sont formés dans les côtés les plus longs du cadre, désignés comme côtés longitudinaux du cadre, et les sections (115, 215, 315) du bord extérieur (112, 212, 312) du cadre de cellule (110, 210, 310) sur lesquelles les segments de fluide (120, 220, 320) sont formés en saillie vers l'extérieur, sont également disposées sur les côtés longitudinaux du cadre.

7. Plaque de distribution selon l'une des revendications 4 ou 5 et 6, **caractérisée en ce que** sur chaque côté longitudinal du cadre, dans exactement l'une des zones de la plaque de distribution (160.1 à 160.4, 260.1 à 260.4, 360.1 à 360.4) du cadre de cellule (110, 210, 310), exactement une section (115, 215, 315) ou exactement deux sections (115, 215, 315) sont prévues pour recevoir un segment de fluide (120, 220, 320).

8. Plaque de distribution selon l'une des revendications précédentes, **caractérisée en ce que** le canal de dérivation (122, 222) décrit une trajectoire courbe allongée (270) s'étendant entre l'un des canaux de fluide (121, 221) et l'un des guides de fluide (114, 214) du cadre de cellule (110, 210, 310), dans laquelle des dérivations de courbe (271) sont prévues aux extrémités opposées de la trajectoire courbe (270), dans laquelle la trajectoire courbe (270) est déviée d'au moins 90°, et les deux dérivations de courbe (271) sont reliées à des extrémités opposées de la trajectoire courbe (270) par des sections guides (272) droites ou courbes, dans laquelle la section transversale d'écoulement de la trajectoire courbe (270) dans la zone des dérivations de courbe (271) est plus grande que dans la zone des sections guides (272) droites ou courbes.

9. Ensemble de cellules comprenant deux plaques de distribution selon l'une des revendications 1 à 8, **caractérisé en ce qu'**une membrane échangeuse d'ions (231) est serrée de manière étanche entre les cadres de cellule (110, 210, 310) de deux plaques de distribution (1, 2, 3) de telle sorte qu'un mélange entre le fluide présent dans la cellule de fluide de la première des plaques de distribution (1, 2, 3) et le fluide présent dans la cellule de fluide de la deuxième des plaques de distribution (1, 2, 3) est empêché, et **en ce que**, sur le côté du cadre de cellule (110, 210, 310) de chacune des plaques de distribution (1, 2, 3) opposé à la membrane échangeuse d'ions (231), une plaque d'électrode (232) est disposée de manière étanche de sorte que l'espace de cellule actif (113, 213, 313) de chacune des plaques de distribution (1, 2, 3) est fermé de manière étanche aux fluides, de sorte que le fluide puisse circuler à travers chacun des espaces de cellule actifs (113, 213, 313) via les segments de fluide (120, 220, 320), dans lequel un dispositif de connexion est prévu, qui est conçu pour exercer une pression de connexion sur les cadres de cellule superposés (110, 210, 310) avec la membrane échangeuse d'ions (231) et les plaques d'électrodes (232).

10. Ensemble de cellules selon la revendication 9 comportant des plaques de distribution (1, 2, 3) selon l'une des revendications 2 à 8, **caractérisé en ce que** la membrane échangeuse d'ions (231) est intégrée dans un joint d'étanchéité (230) qui peut être placé sur le côté supérieur (150, 152, 250, 252) du cadre de cellule (110, 210, 310) et les segments de fluide (120, 220, 320) de chacune des deux plaques de distribution (1, 2, 3), dans lequel les côtés supérieurs respectifs (150, 152, 250, 252) des cadres de cellule (110, 210, 310) et des segments de fluide (120, 220, 320) de chacune des deux plaques de distribution (1, 2, 3) sont disposés face à face.

11. Empilement de plusieurs ensembles de cellules selon la revendication 9 ou 10 comportant des plaques de distribution (1, 2, 3) selon l'une des revendications 4 à 8, **caractérisé en ce que** plusieurs ensembles de cellules sont disposés les uns au-dessus des autres en un empilement, dans lequel les plaques d'électrodes (232) entre deux ensembles de cellules adjacents étant conçues comme des plaques bipolaires.
